# EUROPEAN PATENT SPECIFICATION

(11) **EP 3 141 076 B1**
(45) Date of publication and mention of the grant of the patent: **04.05.2022**
(21) Application number: 14796770.7
(22) Date of filing: 12.11.2014
(51) Int. Cl.: H04W 52/02, H04W 76/28, H04W 72/12, H04W 76/23

(54) **RELATING ACTIVITY PERIODS FOR A UE PERFORMING DEVICE-TO-DEVICE (D2D) AND CELLULAR OPERATIONS**
ZUORDNUNG VON AKTIVITÄTSPERIODEN FÜR EINE BENUTZEREINHEIT MIT D2D- UND MOBILFUNKBETRIEB
PÉRIODES D'ACTIVITÉ RELATIVES POUR UN UE EFFECTUANT DES OPÉRATIONS CELLULAIRES DE DISPOSITIF À DISPOSITIF (D2D)

(30) Priority: 08.05.2014 US 201461990276 P
(43) Date of publication of application: 15.03.2017
(73) Proprietor: Telefonaktiebolaget LM Ericsson (publ), 164 83 Stockholm (SE)
(72) Inventor: SIOMINA, Iana, S-164 80 Stockholm (SE); KAZMI, Muhammad, S-164 80 Stockholm (SE); CALLENDER, Christopher, Guildford Surrey GU2 8SG (GB)
(74) Representative: Zacco Sweden AB
(86) International application number: PCT/EP2014/074418
(87) International publication number: WO 2015/169406

(56) References cited:
- WO-A1-2010/025774
- WO-A1-2010/082114
- US-A1- 2013 170 398
- US-A1- 2013 170 414

## Description

### TECHNICAL FIELD

The present invention relates to wireless communication networks, such as are used to provide cellular communication services to compatible devices, and particularly relates to techniques for coordinating activity states of wireless devices having both device-to-device and cellular communication capabilities.

### BACKGROUND

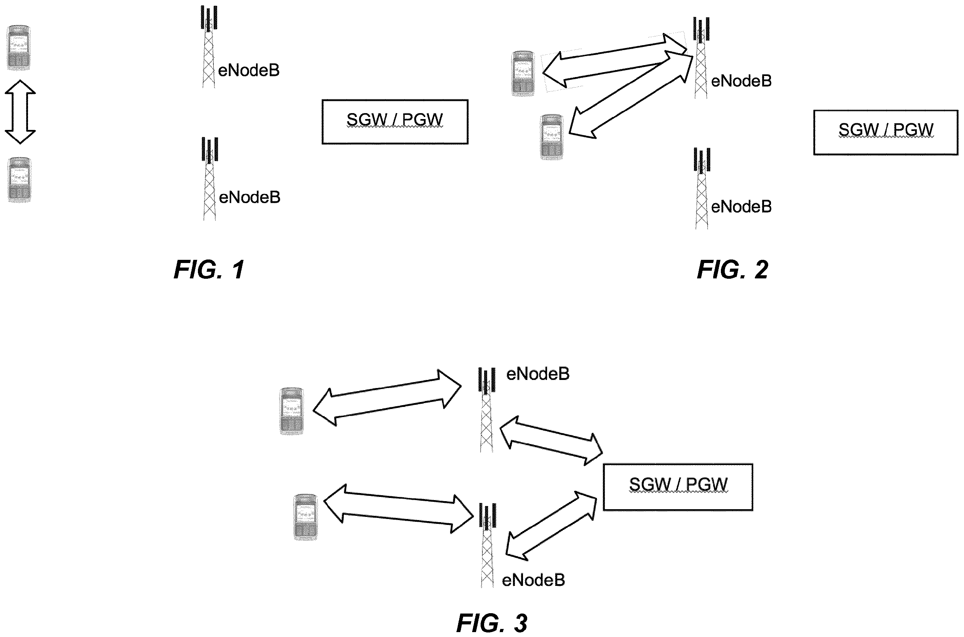

Fig. 1 illustrates an example of two wireless devices using a "direct mode" of communication, based on the two devices being in relatively close proximity to one another. In an example case, the two devices are referred to as user equipments, or UEs. Each UE is configured for operation in a Third Generation Partnership Project (3GPP) communication network, e.g., a cellular communication network based on the Long Term Evolution (LTE) specifications. Further, each UE is configured for Device-to-Device (D2D) communications, which allows each device to talk to other devices having compatible D2D communication capabilities. D2D communications may be network-assisted when one or both devices are operating within the coverage of the cellular network.

Fig. 2 illustrates a variation on D2D communications between the two devices. This variation is referred to as "locally-routed" communications, in that the signaling between the two devices is conveyed through a serving base station-eNodeB in LTE. However, unlike conventional cellular communication signaling between two devices, the signaling is not routed through the default path, which includes the "core network" of the supporting cellular communication network. See Fig. 3 for an example of this conventional default-path routing case, where signaling between two devices is communicated through serving gateway (SGW) / packet gateway (PGW) nodes in the core network associated with the Radio Access Network (RAN) supporting the two UEs.

In device-to-device communication, the source and the target are wireless devices, e.g., UEs. Some of the potential advantages are offloading of the cellular network, faster communication, increased awareness of surrounding wireless devices of interest (e.g., running the same application), higher-quality links due to a shorter distance, etc. Some appealing applications of D2D communications are video streaming, online gaming, media downloading, peer-to-peer (P2P), file sharing, etc.

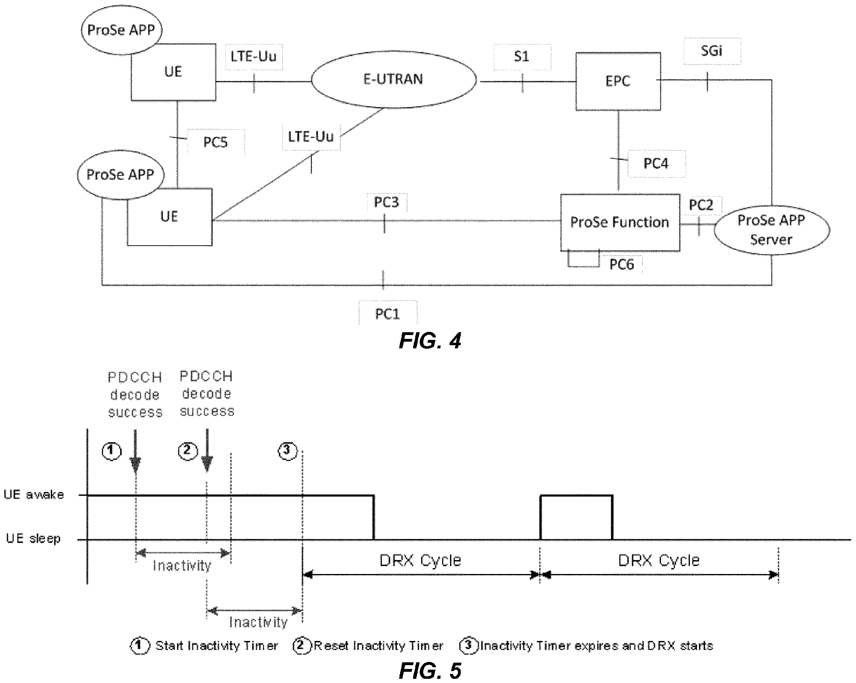

Fig. 4 illustrates a reference architecture for D2D operations, where "ProSe" denotes "Proximity Services" and indicates services available via D2D communication between devices in proximity to one another. See the 3GPP Technical Reference, TR 22.803, *Feasibility study for Proximity Services (ProSe)*, for example details regarding this architecture, and the above-described direct communications, locally routed communications, and default-path communications. Further, in the context of Fig. 4, "APP" denotes application, "E-UTRAN" denotes an Evolved Universal Terrestrial Radio Access Network, as used for the radio access part of LTE. "EPC" denotes Evolved Packet Core, as used for the core network part of LTE.

Numerous challenges attend the effective integration of D2D communications capability into the overall communication system framework. For example, it is recognized herein that "Discontinuous Reception" (DRX) presents a number of challenges and opportunities with respect to D2D-capable wireless devices. Discontinuous Reception (DRX) has been introduced as one of the key solutions for conserving battery power in wireless devices operating within a wireless communication network.

In the LTE example case, DRX is characterized by the following:
- Per UE mechanism (as opposed to per radio bearer);
- May be used in RRC_IDLE and RRC_CONNECTED; In RRC_CONNECTED, eNodeB/UE may initiate the DRX mode when there are no outstanding/new packets to be transmitted/received; in RRC_IDLE
   ∘ 2G and 3G terminal use discontinuous reception in idle state to increase battery life time. HSPA and LTE have introduced DRX also for connected state
- Available DRX values are controlled by the network and start from non-DRX up to x seconds.
- HARQ operation related to data transmission is independent of DRX operation and the UE wakes up to read the PDCCH for possible retransmissions and/or ACK/NAK signaling regardless of DRX. In the downlink, a timer is used to limit the time the UE stays awake awaiting for a retransmission;
- When DRX is configured, the UE may be further configured with an "on-duration" timer during which time the UE monitors the PDCCHs for possible allocations;
- When DRX is configured, periodic CQI reports can only be sent by the UE during the "active-time." RRC can further restrict periodic CQI reports so that they are only sent during the on-duration;
- eNodeB does not transmit packets to UE during the sleep mode.

RRC_CONNECTED mode DRX should not be confused with DRX in idle mode, the latter of which the mobile is set into after a prolonged time of air interface inactivity. Idle mode DRX is also known as paging DRX, and specifies the time the mobile device can go to sleep between two paging intervals that could contain a command for the mobile to wake up again and change back to RRC_CONNECTED state. This DRX is much less fine grained than RRC_CONNECTED mode DRX, and is measured in hundreds of milliseconds or even seconds.

### Parameters Related to DRX

The following definitions apply to DRX in E-UTRAN:
- **on-duration:** duration in downlink subframes that the UE waits for, after waking up from DRX, to receive PDCCHs. If the UE successfully decodes a PDCCH, the UE stays awake and starts the inactivity timer;
- **inactivity-timer:** duration in downlink subframes that the UE waits to successfully decode a PDCCH, from the last successful decoding of a PDCCH, failing which it reenters DRX. The UE shall restart the inactivity timer following a single successful decoding of a PDCCH for a first transmission only (i.e. not for retransmissions).
- **active-time:** total duration that the UE is awake. This includes the "on-duration" of the DRX cycle, the time UE is performing continuous reception while the inactivity timer has not expired and the time UE is performing continuous reception while waiting for a DL retransmission after one HARQ RTT. Based on the above, the minimum active time is of length equal to on-duration, and the maximum is undefined (infinite).

Of the above parameters, the on-duration and inactivity-timer are of fixed lengths, while the active-time is of varying lengths based on scheduling decisions and UE decoding success. Only on-duration and inactivity-timer duration are signaled to the UE by the eNodeB. Further, there is only one DRX configuration applied in the UE at any time. The UE shall apply an on-duration on wake-up from DRX sleep.

DRX mode in LTE is illustrated in Fig. 5. DRX is triggered by means of an inactivity time known as DRX. As can be seen from Figure 5, the UE activity time may be extended if PDCCH is received during ON Duration time. However, it may also be shorten by a MAC DRX command, upon reception of which the UE stops onDurationTimer and drx-InactivityTimer.

If PDCCH has not been successfully decoded during the on-duration, the UE shall follow the DRX configuration (i.e. the UE can enter DRX sleep if allowed by the DRX configuration):
- This applies also for the sub-frames where the UE has been allocated predefined resources.
- If it successfully decodes a PDCCH for a first transmission, the UE shall stay awake and start the inactivity timer (even if a PDCCH is successfully decoded in the sub-frames where the UE has also been allocated predefined resources) until a MAC control message tells the UE to re-enter DRX, or until the inactivity timer expires. In both cases, the DRX cycle that the UE follows after re-entering DRX is given by the following rules:
   ∘ If a short DRX cycle is configured, the UE first follows the short DRX cycle and after a longer period of inactivity the UE follows the long DRX cycle; if short DRX cycle is used, the long cycle will be a multiple of the short cycle;
      ▪ Durations for long and short DRX are configured by the RRC. The transition between the short and long DRX cycles is determined by the eNodeB MAC commands (if the command is received and short DRX is configured, the UE will (re)start drxShortCycleTimer and use the Short DRX Cycle; otherwise long DRX will be used) or by the UE based on an activity timer
   ∘ Else the UE follows the long DRX cycle directly.

Some parameters that may be configured by the network:
- onDurationTimer can be (in PDCCH subframes): 1, 2, 3, 4, 5, 6, 8, 10, 20, 30, 40, 50, 60, 80, 100, and 200
- drx-InactivityTimer can be (in PDCCH subframes): 1, 2, 3, 4, 5, 6, 8, 10, 20, 30, 40, 50, 60, 80, 100, 200, 300, 500, 750, 1280, 1920, 2560. A specific value may also be configured if the UE supports IDC (in-device co-existence)
- longDRX-CycleStartOffset (in subframes): depending on the cycle length, but up to 2559
- shortDRX-cycle (in subframes): 2, 5, 8, 10, 16, 20, 32, 40, 64, 80, 128, 160, 256, 320, 52, 640

### UE Active Time and UE Transmissions when Using DRX

When a DRX cycle is configured, the Active Time includes the time while:
- *onDurationTimer* or *drx-InactivityTimer* or *drx-RetransmissionTimer* or *mac-ContentionResolutionTimer* is running; or
- a Scheduling Request is sent on PUCCH and is pending; or
- an uplink grant for a pending HARQ retransmission can occur and there is data in the corresponding HARQ buffer; or
- a PDCCH indicating a new transmission addressed to the C-RNTI of the UE has not been received after successful reception of a Random Access Response for the preamble not selected by the UE.

Generally, new transmissions can only take place during the active-time (so that when the UE is waiting for one retransmission only, it does not have to be "awake" during the RTT).

When not in Active Time, type-0-triggered SRS [2] shall not be reported.

If CQI masking (*cqi-Mask*) is setup by upper layers:
- when *onDurationTimer* is not running, CQI/PMI/RI/PTI on PUCCH shall not be reported,
else:
- when not in Active Time, CQI/PMI/RI/PTI on PUCCH shall not be reported.

That is, cqi-Mask is effectively limiting CQI/PMI/PTI/RI reports to the on-duration period of the DRX cycle, and the same one value applies for all serving cells (the associated functionality is common i.e. not performed independently for each cell).

There are a few exceptions:
- Regardless of whether the UE is monitoring PDCCH or not, the UE receives and transmits HARQ feedback and transmits type-1-triggered SRS when such is expected.
- A UE may optionally choose to not send CQI/PMI/RI/PTI reports on PUCCH and/or type-0-triggered SRS transmissions for up to 4 subframes following a PDCCH indicating a new transmission (UL or DL) received in subframe *n-i*, where *n* is the last subframe of Active Time and *i* is an integer value from 0 to 3. After Active Time is stopped due to the reception of a PDCCH or a MAC control element a UE may optionally choose to
- continue sending CQI/PMFRI/PTI reports on PUCCH and/or SRS transmissions for up to 4 subframes. The choice not to send CQI/PMFRUPTI reports on PUCCH and/or type-0-triggered SRS transmissions is not applicable for subframes where *onDurationTimer* is running and is not applicable for subframes *n-i* to *n.*

DRX mechanisms used in LTE (or in other cellular communications technologies) can be adapted for use in D2D communications. However, for a given wireless device, the DRX mechanism for D2D operation may be independent of a DRX cycle for cellular operations, since the wireless devices involved in D2D communications may be controlled by different cellular base stations, or by no base station at all.

WO 2010/082114 describes communicating, by a first apparatus, with at least a second apparatus via a device-to-device communication link. In various embodiments, the method may also include receiving resource allocations, from a base station. In some embodiments, the method may include determining, based at least partly on the received resource allocations, which resources are allocated to at least the second apparatus for communication with the base station. WO 2010/025774 A1 describes a method for scheduling device-to-device data transmissions between a source user equipment (UE) and a given UE by utilizing a discontinuous reception mode. US 2013/170398 A1 describes a method that enables a user equipment to employ a buddy list to initiate a device-to-device discovery process. US 2013/17041 4 A1 describes a method performed by a base station that enables a user equipment (UE) to operate as a serving UE in a personal cell.

### SUMMARY

In situations where a D2D device is involved in both cellular and D2D operations, excessive power consumption at the UE as well as suboptimal UE performance may be expected if the times or instances or durations over which the D2D capable UE has cellular activity over the UE-NW link and D2D activity over D2D communication link are not coordinated. This may shorten the UE battery life and/or also degrade throughput and/or increase the amount of UE processing.

According to some embodiments of the techniques and apparatus disclosed herein, when the UE is performing D2D operation or intends to perform a D2D operation, activity/inactivity configuration of the UE is adapted based on whether the UE is performing D2D operation over D2D link, cellular operation over UE-NW link or both. The adaptation may be performed by the network node (e.g., when the UE is in a connected state with respect to the network) or by the UE (e.g., autonomously or when the UE is in an idle state with respect to the network node) or by both network node and the UE.

Among the various aspects of the teachings herein, one example embodiment relates to methods in a network node, comprising the steps of:
- determining (1) whether at least a first D2D capable UE is or will be performing a D2D operation;
- determining (2) whether the at least the first D2D capable UE is or will be performing cellular operation;
- adapting (3) activity and/or inactivity state configurations for the at least the first D2D UE based on the determining (1) and (2), adapting the activity state configuration comprises configuring discontinuous reception, DRX, for the D2D operation and for the cellular operation;
- (Optional) signaling of the adapted configuration to at least the first UE and/or another node;
- (Optional) determining (4) whether the at least the first UE with an adapted configuration (3) has stopped or will stop performing a D2D operation and a cellular operation with the network node; and
- (Optional) deconfiguring or reconfiguring the adapted activity and/or inactivity state configuration(s) (3) for the at least first D2D UE based on determining (4), wherein deconfiguring or reconfiguring the adapted activity/inactivity state configuration comprises deconfiguring the DRX resulting in a continuous reception by the D2D-capable UE.

Another example embodiment relates to methods in a first D2D UE, comprising the steps of:
- determining (1) whether the first D2D UE is or will be performing a D2D operation;
- determining (2) whether the first D2D UE is or will be performing cellular operation with a network node;
- adapting activity and/or inactivity state configurations for the UE based on the determining (1) and (2), wherein adapting the activity state configuration comprises configuring discontinuous reception, DRX, for the D2D operation and for the cellular operation;
- (Optional) signaling of the adapted configuration to at least a second D2D UE and/or another node;
- (Optional) determining (4) whether the first D2D UE with an adapted configuration (3) has stopped or will stop performing a D2D operation and a cellular operation with the network node; and
- (Optional) deconfiguring or reconfiguring the adapted activity and/or inactivity state configuration(s) (3) for the first D2D UE based on determining (4), wherein deconfiguring or reconfiguring the adapted activity/inactivity state configuration comprises deconfiguring the DRX resulting in a continuous reception by the D2D-capable UE.

Of course, the present invention is not limited to the above features and advantages. Those of ordinary skill in the art will recognize additional features and advantages upon reading the following detailed description, and upon viewing the accompanying drawings.

### BRIEF DESCRIPTION OF THE DRAWINGS

Fig. 1 is a block diagram illustrating a "direct mode" data path in Device-to-Device (D2D) communications between two wireless devices.
Fig. 2 is a block diagram illustrating a "locally routed" data path for D2D communications between two wireless devices.
Fig. 3 is a block diagram illustrating a "default" data path between two wireless devices, based on network communications rather than D2D communications.
Fig. 4 is an example network architecture that incorporates D2D functionality.
Fig. 5 is a diagram illustrating Discontinuous Reception (DRX) in a Long Term Evolution (LTE) context.
Fig. 6 is a logic flow diagram of one embodiment of a method of processing at a network node.
Fig. 7 is a logic flow diagram of one embodiment of a method of processing at a wireless device.
Fig. 8 is a block diagram of one embodiment of a network node and a wireless device configured to implement activity state control as taught herein.
Fig. 9 is a block diagram of another embodiment of the network node introduced in Fig. 6.
Fig. 10 is a block diagram for one embodiment of a wireless communication network, wherein a base station or other network node is configured to operate as the network node shown in Fig. 8. The invention is set out in the appended set of claims.

In particular, the subject matter of the description in paragraphs [0050]-[0063] is according to the invention as defined in the claims. Any examples/embodiments and features described in this specification that do not fall under the scope of the independent claims are to be interpreted as examples useful for understanding various embodiments of the invention.

### DETAILED DESCRIPTION

### Generalizations

Device-to-device (D2D). In some examples, the terms "D2D" and "proximity service" (ProSe) may be used interchangeably.

D2D UE or D2D device or interchangeably called UE or even D2D-capable UE in some embodiments herein, may comprise any entity capable of at least receiving or transmitting radio signals on a direct radio link, i.e., between this entity and another D2D capable entity. A D2D-capable device may also be comprised in a cellular UE, PDA, a wireless device, laptop, mobile, sensor, relay, D2D relay, or even a small base station employing a UE-like interface, etc.
A D2D-capable is able to support at least one D2D operation.

D2D operation may comprise any action or activity related to D2D, e.g., transmitting or receiving a signal/channel type for D2D purpose, transmitting or receiving data by means of D2D communication, transmitting or receiving control or assistance data for D2D purpose, transmitting or receiving a request for control or assistance data for D2D, selecting a D2D operation mode, initiating/starting D2D operation, switching to D2D operation mode from a cellular operation mode, configuring receiver or transmitter with one or more parameters for
D2D. D2D operation may be for a commercial purpose or to support public safety, using the data related to D2D. D2D operation may or may not be specific to a certain D2D service.

D2D transmission is any transmission by a D2D device. Some examples of D2D transmission are physical signals or physical channels, dedicated or common/shared, e.g., reference signal, synchronization signal, control channel, data channel, broadcast channel, paging channel, etc. A D2D transmission on a direct radio link is intended for receiving by another D2D device. A D2D transmission may be a unicast, groupcast, or broadcast transmission.

DL radio signal is a radio signal transmitted by a radio network node. UL radio signal transmitted by a UE. A radio signal transmitted by a D2D UE to another D2D UE is also considered herein an UL radio signal, though in some embodiments it may also be referred to as a direct radio signal.

A coordinating node: a node that schedules, decides, at least in part, or selects time-frequency resources to be used for at least one of: cellular transmissions and D2D transmissions. The coordinating node may also provide the scheduling information to another node such as another D2D device, a cluster head, a radio network node such as eNodeB, or a network node (e.g. a core network node). The coordinating node may communicate with a radio network node.

Radio spectrum: Although at least some of the embodiments are described for D2D transmissions in the UL spectrum (FDD) or UL resources (TDD), the embodiments are not limited to the usage of UL radio resources, neither to licensed or unlicensed spectrum, or any specific spectrum at all.

A cellular network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology): e.g. LTE, GSM, CDMA, WCDMA, WiFi, WLAN, WiMAX, etc.

A network node may be a radio network node or another network node. Some examples of a radio network node are a radio base station, a relay node, an access point, a cluster head, RNC, etc. A radio network node is comprised in a wireless communication network and may also support cellular operation. Some examples of a network node which is not a radio network node: a core network node, MME, a node controlling at least in part mobility of a wireless device, SON node, O&M node, positioning node, a server, an application server, a D2D server (which may be capable of some but not all D2D-related features), a node comprising a ProSe function, a ProSe server, an external node, or a node comprised in another network.

### Problems with Existing Solutions

A D2D capable UE may be configured in low activity mode e.g. with certain DRX cycle. The cellular communication performed by D2D UE over D2D to network node link (also known as UE-NW link) is typically independent of the D2D activity performed by the same D2D UE over the D2D communication link. This means the same D2D UE may be active on its UE-NW link and D2D communication link at different times or partially overlapping times.

The prior art solutions do not coordinate cellular and D2D activity periods of a UE to optimize its power consumption. If the times or instances or durations over which the D2D capable UE has cellular activity over the UE-NW link and D2D activity over D2D communication link are not coordinated, excessive power consumption at the UE as well as suboptimal UE performance may be expected. This may shorten the UE battery life and/or also degrade throughput and/or increase the amount of UE processing.

According to some embodiments of the techniques and apparatus disclosed herein, when the UE is performing D2D operation or intends to perform a D2D operation, activity/inactivity configuration of the UE is adapted based on whether the UE is performing D2D operation over D2D link, cellular operation over UE-NW link or both. The adaptation may be performed by the network node (e.g., when the UE is in a connected state with respect to the network) or by the UE (e.g., autonomously or when the UE is in an idle state with respect to the network node) or by both network node and the UE.

The embodiments described herein may be combined with each other in any way.

### Methods in a network node

According to one aspect of the inventive techniques disclosed herein, a network node:
- determines (step 1) whether at least a first D2D capable UE is or will be performing a D2D operation;
- determines (step 2) whether the at least the first D2D capable UE is or will be performing cellular operation with the network node;
- adapts (step 3) activity and/or inactivity state configurations for the at least the first D2D UE based on the determining (step 1) and (step 2);
- (Optional) signals (step 4) the adapted configuration to at least the first UE and/or another node;
- (Optional) determines (step 5) whether the at least the first UE with an adapted configuration (step 3) has stopped or will stop performing a D2D operation and a cellular operation with the network node; and
- (Optional) deconfigures or reconfigures (step 6) the adapted activity and/or inactivity state configuration(s) (3) for the at least first D2D UE based on determining (step 4).

The network node may be an eNodeB in an LTE network, for example. Examples of the aspects of an activity/inactivity configuration that can be adapted in various embodiments include: a DRX configuration, a DRX period, an active time, an on-duration, an inactivity timer, a DTX cycle, a DTX ON duration, a DTX OFF duration, etc. The UE may be in a connected or idle state with respect to the cellular network node e.g. serving eNode B.

Details of the steps summarized above follow.

**Step 1 -** In this step, the network node determines whether there is at least one D2D UE (say first D2D UE) which is or will be performing a D2D operation over D2D link. In some examples, the D2D operation may be with a second D2D UE. In another example, e.g., broadcast, the D2D operation may not target any particular UE. The determination may be based, e.g., on one or more of:
- an implicit or explicit indication received from one or more of: the first D2D UE, the second D2D UE and another network node,
- a report indicating one or more second D2D UEs discovered by the first UE, the report received e.g. from the first UE or another network node,
- an indication of that the first UE is within a certain interest group for which a D2D operation is on-going or will start,
- radio measurements (e.g., detecting of a D2D-related signal from the UE),
- a resource request or service request for D2D operation received from the UE,
- scheduling information for D2D operation for the UE received from the UE or from another node (e.g., another UE or another network node),
- by retrieving configuration information from the network node in case the first D2D UE is configured and/or assigned resources for performing the D2D operation with another D2D UE e.g. the second D2D UE,
- a pattern of D2D activity between the first D2D UE and at least the second D2D UE e.g. periodic activity over P (e.g. P=5) subframes after every Q (e.g. Q=4) radio frames. The pattern of such cellular activity may be obtained by one or more of the following means:
   ∘ a pre-defined pattern,
   ∘ a configured or pre-configured pattern by the network node,
   ∘ a pattern acquired from another node, e.g., from any one or more of another network node, the first D2D UE and second D2D UE,
   ∘ historical data or previously detected activity levels on D2D link for the first D2D UE.

**Step 2 -** If in Step 1 it has been determined that there is at least the first D2D UE, which is or will be performing a D2D operation, the network node determines whether the at least first UE is also performing or will be performing a cellular operation over the D2D UE to network communication link (also known as UE-NW link). The determination may be based, e.g., on one or more of:
- scheduling information for a cellular operation for the first D2D UE,
- a pattern of cellular activity between the first D2D UE and network node e.g. periodic activity over R (e.g. R=10) subframes after every S (e.g. S=40) radio frames. The pattern of such cellular activity may be obtained by one or more of the following means:
   ∘ a pre-defined pattern,
   ∘ a configured or pre-configured pattern by the network node,
   ∘ a pattern acquired from another node, e.g., from any one or more of another network node, the first D2D UE and second D2D UE,
   ∘ historical data or previously detected activity levels on UE-NW link
- an unfinished on-going cellular operation which has been triggered earlier (e.g., handover),
- measurement configuration of the first D2D UE known to the network node,
- a request from the first D2D UE (e.g., RRC Connection Request),
- information derived from Radio Resource Management functions in the network (e.g., from an Admission Control function),
- an indication received from the second D2D UE, which is performing or is configured to perform D2D communication with the first D2D UE. The second D2D UE may be aware that the cellular operation is being performed or is expected to be performed by the first D2D UE over the UE-NW link. For example, the first D2D UE may indicate this to the second D2D UE.

**Step 3 -** This step is performed if there have been determined at least one D2D operation and at least one cellular operation for the same first D2D UE in Step 1 and Step 2, respectively.

Based on the determining Steps 1 & 2, the network node may adapt the activity/inactivity state configuration for D2D operation (while keeping that for the cellular unchanged), for cellular operation (while keeping that for the D2D operation unchanged), or both operations. The adaptation may comprise, e.g.:
- aligning D2D and cellular (DL, UL, or both) active state periods, so that they overlap, at least in part;
- configuring orthogonal DRX ON periods for cellular and D2D, i.e., periods are nonoverlapping or separated in time
   ∘ In one example there may also be a minimum separation in time, e.g., at east N subframes or X time units between D2D active state periods and cellular active state periods; the minimum time separation may be pre-defined, in one example;
   ∘ In another example there may also be a maximum separation in time, e.g., at most M subframes or Y time units between D2D active state periods and cellular active state periods; the maximum time separation may be pre-defined, in one example;
- configuring joint DRX ON period for cellular and D2D (e.g., by extending the DRX ON period to cover time periods with cellular and D2D operation), where the D2D and cellular operations may or may not overlap in time,
- configuring activity/inactivity state configuration to minimize the total active time of the UE,
- configuring a first DRX cycle and a second DRX cycle for operations on D2D link and UE-NW link, wherein the first and the second DRX cycles are related to by a relation. Examples of such relations are:
   ∘ the first and the second DRX cycles are of the same length,
   ∘ if the first and the second DRX cycles are of the same length then their ON durations are separated by the length of the DRX cycle,
   ∘ lengths of the first and the second DRX cycles are related by a relation. For example, the length of the first DRX cycle may be an integer multiple of the length of the second DRX cycle or vice versa.

The adaptation may also account, e.g., for some UE capability, e.g.,
- orthogonal DRX ON periods may be preferred for UEs not capable of simultaneous D2D and cellular operation in general or for certain type of operations,
- orthogonal DRX ON periods may be preferred for UEs with 1 transmit branch,
- orthogonal DRX ON periods may be preferred for UEs that may cause interruptions when switching between D2D and cellular operation (one the same or different frequency carriers or RATs),
- aligned DRX ON periods may be preferred for UEs that are capable of simultaneous D2D and cellular operation either in general or for the type of operation being performed,

**Step 4 -** The adapted configuration may be signaled, e.g., to:
- the at least the first D2D UE or another second D2D UE, e.g., via unicast, multicast, or broadcast, or
- another radio network node (e.g., via X2 or via a UE) or core network node.

**Step 5 -** In this step it is determined whether the at least first D2D UE with an adapted configuration has stopped or will stop performing a D2D operation and a cellular operation. The determination may be based, e.g., on one or more of:
- an implicit or explicit indication received from one or more of: the first D2D UE, the second D2D UE and another network node that D2D operations have ceased or are going to cease,
- radio measurements indicating that D2D operations have ceased (e.g., detecting of a D2D-related signal from the first D2D UE),
- an indication of the completion of a resource request or service request for D2D operation received from at least the first D2D UE,
- scheduling information for D2D operation for the first D2D UE received from any one or more of: the first D2D UE, the second D2D UE and from another node (e.g., another UE or another network node.

**Step 6 -** This step consists of deconfiguring or reconfiguring the adatpted activity and/or inactivity state configuration(s) (3) for the at least one UE based on determining (4). The deconfiguration or reconfiguration may consist of:
- deconfiguring the DRX state, resulting in continuous reception by at least the first D2D UE
- restoring an earlier DRX configuration which was in use before simultaneous cellular and D2D operation commenced
- configuring any other DRX state that does not account for simultaneous D2D and cellular operation by the at least first D2D UE.

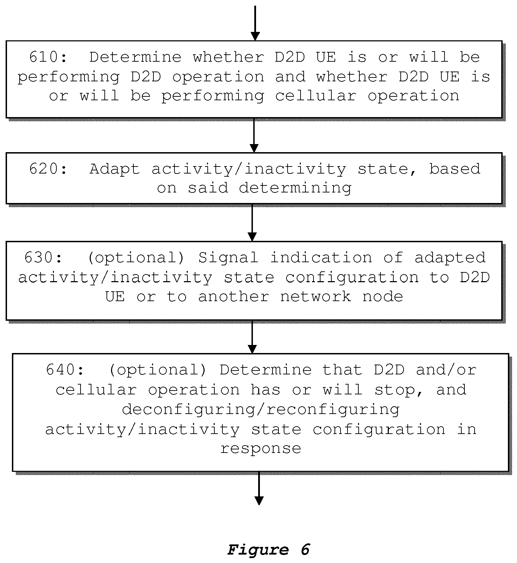

Figure 6 illustrates a generalized method suitable for implementation in a network node configured for operation in a wireless communication network. As shown at block 610, the method comprises determining whether a D2D-capable user equipment (UE) is or will be performing a D2D operation and whether the D2D-capable UE is or will be performing a cellular operation. As shown at block 620, the network node then adapts an activity/inactivity state configuration for the D2D-capable UE, based on this determining. In some embodiments, the adapting is carried out based on determining that the D2D-capable UE is or will be performing a D2D operation and is or will be performing a cellular operation, and may more particularly comprise determining whether the D2D-capable UE will be performing a D2D operation within a first predetermined time interval and wherein determining whether the D2D-capable UE will be performing a cellular operation comprises determining whether the D2D-capable UE will be performing a cellular operation within a second predetermined time interval, wherein the first and second predetermined time intervals may or may not be the same.

In some embodiments, as shown at block 630, the method further comprises signaling an indication of the adapted activity/inactivity state configuration to the D2D-capable UE or to another network node. This need not occur in every instance or embodiment of the illustrated method, however. Likewise, as shown at block 640, the method may further comprise determining that the D2D-capable UE with an adapted activity/inactivity state configuration has stopped or will stop performing a D2D operation and/or a cellular operation and, in response to said determining, deconfiguring or reconfiguring the adapted activity/inactivity state configuration for the D2D-capable UE.

Any of the variations discussed above are applicable to the method illustrated in Figure 6.

### Methods in a D2D UE

Other aspects of the inventive techniques and apparatus disclosed herein include methods carried out in a D2D-capable UE, the methods comprising the steps of:
- determining (step 1) whether the first D2D UE is or will be performing a D2D operation;
- determining (step 2) whether the first D2D UE is or will be performing cellular operation;
- adapting (step 3) activity and/or inactivity state configurations for the first D2D UE based on the determining (step 1) and (step 2);
- (Optional) signaling (step 4) of the adapted configuration to the first D2D UE or another node (e.g. a network node and/or the second D2D UE);
- (Optional) determing (step 5) whether the first D2D UE with an adapted configuration (3) has stopped or will stop performing a D2D operation and a cellular operation; and
- (Optional) Deconfiguring (step 6) or reconfiguring the adapted activity and/or inactivity state configuration(s) (step 3) for the first D2D UE based on determining (step 5).

Examples of the aspects of an activity/inactivity configuration that can be adapted in various embodiments include: a DRX configuration, a DRX period, an active time, an on-duration, an inactivity timer, etc. The UE may be in a connected or idle state with respect to the cellular network.

Example details of the steps summarized above follow.

**Step 1 -** In this step, the first D2D UE determines whether there is/will be at least one D2D operation performed by the first D2D UE. In some examples, the D2D operation may be with a second D2D UE. In another example, e.g., broadcast, the D2D operation may not target any particular UE. The determination may be based, e.g., on one or more of:
- scheduling of a D2D operation in the first D2D UE, e.g., triggered by an application program in the first D2D UE,
- at least one second D2D UE has been discovered by the first UE, with which the first UE can perform at least one D2D operation,
- a request is received from at least the second D2D UE for establishing D2D operation between the first and the second D2D UEs,
- a request for performing D2D operation is received from the network node, e.g., a serving network node,
- a periodic pattern of D2D operation, e.g., the first D2D UE performs D2D operation with the second D2D UE according to certain activity pattern, e.g., periodically over certain time duration with certain period,
- upon triggering of one or more events or when one or more conditions are met, e.g.:
   ∘ if the first D2D is in out of coverage of the network node,
   ∘ signal quality measured on the signals transmitted by the network node falls below a threshold,
   ∘ the first D2D UE has lost synchronization with the second D2D UE.

**Step 2 -** If in Step 1 it has been determined that there is a D2D operation, the first D2D UE determines whether it is also performing or will be performing a cellular operation. The determination may be based, e.g., on one or more of:
- scheduling information for a cellular operation in the first D2D UE, e.g. triggered by an application program in the first D2D UE or previously received information from the network node,
- an unfinished on-going cellular operation which has been triggered earlier (e.g., handover),
- measurement configuration of the first D2D UE,
- a request for performing cellular operation (i.e., between the first D2D UE and the network node) is received from the second D2D UE. For example, the second D2D UE may be informed by the network node to relay such information to the first D2D UE via D2D link,
- a periodic pattern of cellular operation e.g. the first D2D UE performs cellular operation with the network node according to a pattern of activity e.g. periodically over certain time duration with certain period,
- upon triggering of one or more events or when one or more conditions are met, e.g.:
   ∘ new signal measurement result(s) are available in the first D2D UE. The measurement may be performed by the first D2D UE on the signals transmitted by the network node(s) and/or on signals transmitted by other D2D UEs.
   ∘ signal quality measured on the signals transmitted by the network node falls below a threshold,
   ∘ the first D2D UE has lost synchronization with the second D2D UE,
   ∘ the first D2D UE is unable to perform and/or maintain D2D operation with the second D2D UE.

**Step 3** - This step is performed if it has been determined that at least one D2D operation and at least one cellular operation for the first D2D UE are to be performed. Based on the determining Steps 1 & 2, the first D2D UE may adapt the activity/inactivity state configuration for D2D operation (while keeping that for the cellular unchanged), for cellular operation (while keeping that for the D2D operation unchanged), or both operations.

The adaptation may be autonomous in the first D2D UE or may be controlled by the network node or by another second D2D UE (e.g., the UE implementing Step 3 uses some control data from the network or the controlling UE, respectively, while performing the adaptation).

The adaptation may comprise, e.g.:
- aligning D2D and cellular (DL, UL, or both) active state periods, so that they overlap, at least in part;
- configuring orthogonal DRX ON periods for cellular and D2D, i.e., separated in time
   ∘ In one example there may also be a minimum separation in time, e.g., at east N subframes or X time units between D2D active state periods and cellular active state periods; the minimum time separation may be pre-defined, in one example;
   ∘ In another example there may also be a maximum separation in time, e.g., at most M subframes or Y time units between D2D active state periods and cellular active state periods; the maximum time separation may be pre-defined, in one example;
- configuring joint DRX ON period for cellular and D2D (e.g., by extending the DRX ON period to cover time periods with cellular and D2D operation), where the D2D and cellular operations may or may not overlap in time;
- configuring activity/inactivity state configuration to minimize the total active time of the UE,
- aligning a first DRX cycle with a second DRX cycle for operations on D2D link and UE-NW link, wherein the first DRX cycle is aligned with the second DRX cycles by a relation, which may be pre-defined, indicated by the network node or autonomously decided by the first D2D UE. Examples of such relations are:
   ∘ setting the first DRX cycle equal to the length of the second DRX cycle,
   ∘ shortening the first DRX cycle or changing to non-DRX during the time when the first D2D becomes active on the UE-NW link,
   ∘ shortening the first DRX cycle or changing to non-DRX during the time when inactivity timer related to the second DRX cycle is on.

The adaptation may also account, e.g., for some UE capability, e.g.:
- orthogonal DRX ON periods may be preferred for UEs not capable of simultaneous D2D and cellular operation in general or for certain type of operations,
- orthogonal DRX ON periods may be preferred for UEs with one transmit branch,
- orthogonal DRX ON periods may be preferred for UEs that may cause interruptions when switching between D2D and cellular operation (one the same or different frequency carriers or RATs),
- aligned DRX ON periods may be preferred for UEs that are capable of simultaneous D2D and cellular operation either in general or for the type of operation being performed.

**Step 4 -** The adapted configuration may be signaled, e.g., to:
- the at least the second D2D UE or another D2D UE, e.g., via unicast, multicast, or broadcast, or
- another radio network node (e.g., via X2 or via a UE) or core network node.

The UE signaling adapted configurations may signal multiple adapted configurations, from which another UE or radio network node selects a preferred adapted configuration.

**Step 5 -** In this step it is determined that either cellular operations have ceased or are going to cease, or that D2D operations have ceased or are going to cease. This may be determined by the first D2D UE, e.g., by:
- an RRC state transition e,g. to RRC idle state
- D2D scheduling information
- cellular scheduling information
- checking the duration over which a pattern of activity is valid, i.e., whether the pattern of activity has expired or is expected to expire at certain future time instance.

**Step 6 -** This step consists of deconfiguring or reconfiguring the adapted activity and/or inactivity state configuration(s) (3) for the first D2D UE based on the determining in step 5. The deconfiguration or reconfiguration may consist of:
- deconfiguring the DRX state, resulting in continuous reception by the first D2D UE
- restoring an earlier DRX configuration which was in use before simultanueous cellular and D2D operation commenced,
- configuring any other DRX state which does not account for simultaneous D2D and cellular operation by the at least the first D2D UE,
- signaling to another radio network node or the first D2D UE that the adapted activity and/or inactivity state configurations for the first D2D UE are no longer required.

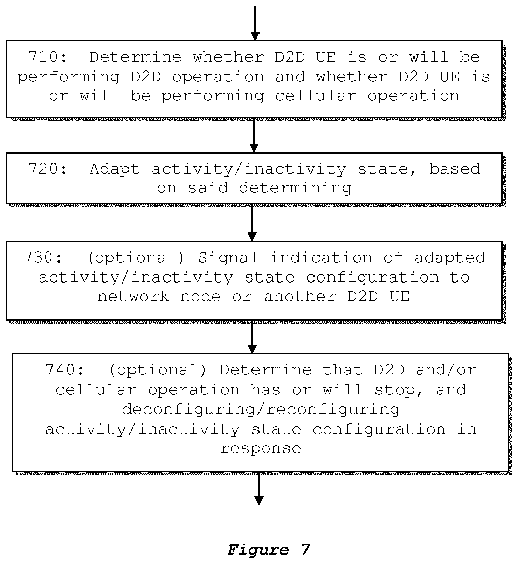

Figure 7 illustrates a generalized method suitable for implementation in a D2D-capable user equipment (UE) that is also configured for operation in a wireless communication network. As shown at block 710, the method comprises determining whether the D2D-capable user equipment (UE) is or will be performing a D2D operation and whether the D2D-capable UE is or will be performing a cellular operation. As shown at block 720, the network node then adapts an activity/inactivity state configuration for the D2D-capable UE, based on this determining. In some embodiments, the adapting is carried out based on determining that the D2D-capable UE is or will be performing a D2D operation and is or will be performing a cellular operation, and may more particularly comprise determining whether the D2D-capable UE will be performing a D2D operation within a first predetermined time interval and wherein determining whether the D2D-capable UE will be performing a cellular operation comprises determining whether the D2D-capable UE will be performing a cellular operation within a second predetermined time interval, wherein the first and second predetermined time intervals may or may not be the same.

In some embodiments, as shown at block 730, the method further comprises signaling an indication of the adapted activity/inactivity state configuration to a network node or to another D2D UE. This need not occur in every instance or embodiment of the illustrated method, however. Likewise, as shown at block 740, the method may further comprise determining that the D2D-capable UE with an adapted activity/inactivity state configuration has stopped or will stop performing a D2D operation and/or a cellular operation and, in response to said determining, deconfiguring or reconfiguring the adapted activity/inactivity state configuration for the D2D-capable UE.

Any of the variations discussed above are applicable to the method illustrated in Figure 7.

### Using UE capability for UE active state adaptation

According to other aspects of the inventive techniques and apparatus disclosed herein, one or more D2D UE capabilities may be taken into account in the adaptation of the UE activity/inactivity state configuration. This aspect may be combined with the several methods described above, in which a network node or D2D UE adapts the UE's activity/inactivity state configuration.

Some examples of the UE capabilities that may be taken into account in the UE activity/inactivity state adaptation include:
- the UE's capability for simultaneous D2D operation (transmission or reception/sensing/measurement) with cellular operation (transmission or reception/measurement);
- the UE's carrier aggregation (CA) capability;
- the number of transmit/receive antennas in the UEs that may be used for D2D and/or cellular operation;
- a transmit power related capability, e.g.,
   ∘ a maximum power imbalance;
   ∘ a maximum allowed or the configured UE transmit power on D2D and/or cellular link;
- a receive power-related capability, e.g.:
   ∘ a maximum power imbalance
   ∘ the sensitivity of the UE receiver on the D2D link and/or the cellular link.
- device co-existence aspects, e.g., whether the D2D UE can also operate on non-cellular systems (e.g. WLAN, GNSS etc) in parallel with the D2D operation;
- whether the D2D UE needs to interrupt the reception and/or transmission of signals when performing transition or switching between operations on the D2D link and UE-NW link on the same carrier frequency or different carrier frequency. The interruption time may be *S* subframes or *T* time units, for example.

Any of the UE capabilities considered in this part of the invention may be, e.g.,:
- a signaled capability. In this case the D2D UE signals its capability to the network node and/or to another D2D UE e.g. radio network node, core network node;
- a pre-defined capability, e.g., as declared or defined in a standard or in a manufacturer's specifications;
- a capability associated with a certain release and/or feature.

### Methods of Meeting Pre-Defined Rules and Requirements

Examples of pre-defined requirements are measurement performance of measurements performed on the D2D link and/or on UE-NW link, reception performance for receiving certain signals (e.g., D2D PSS, SSS, control channel, discovery channel, D2D physical signal, etc.). For example, the measurement performance may be expressed as the time to do a measurement, measurement accuracy, number of correct measurement reports (e.g., number of ACK/NACK reports), BLER, etc. In one example, the first measurement time may be longer than the second and the third measurement times. In another example, the second measurement time may be shorter than the third measurement time

The D2D UE, when configured with certain activity level for D2D operation and UE-NW link operation, shall meet certain pre-defined requirements, also known as first set of pre-defined requirements, e.g., a first measurement time of a measurement. The first set of pre-defined requirements may be the same or different for the UE compared to when it is not configured with the UE-NW link operation and/or D2D operation.

The D2D UE, when configured to adapt certain activity level for D2D operation and UE-NW link operation according to the rules or procedures defined above for network node-based adaptation of activity, shall meet also certain pre-defined requirements, also known as second set of pre-defined requirements, e.g., a second measurement time of a measurement. The second set of pre-defined requirements may be the same or different for the UE compared to when it is not configured with the UE-NW link operation and/or D2D operation.

The D2D UE, when configured to adapt certain activity level for D2D operation and UE-NW link operation according to the rules or procedures defined above for D2D UE-based adaptation of activity, shall meet also certain pre-defined requirements, also known as a third set of pre-defined requirements, e.g., a third measurement time of a measurement. The third set of pre-defined requirements may be the same or different for the UE compared to when it is not configured with the UE-NW link operation and/or D2D operation.

### Example Network Node and Wireless Device Configurations

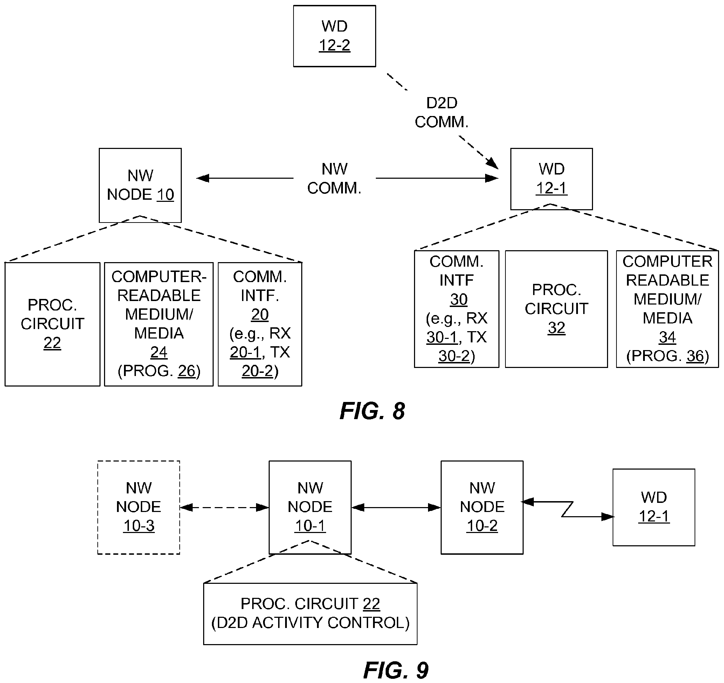

Fig. 8 illustrates example details for one example of a network node 10 and a wireless device 12-1, which is shown in context with another wireless device 12-2. By way of non-limiting example, the network node 10 comprises a radio base station or other node configured for operation in a wireless communication network, such as a cellular communication network configured according to the Long Term Evolution (LTE) specifications, or other Third Generation Partnership Project (3GPP) specifications.

Correspondingly, the wireless device 12-1 is configured for operation in a wireless communication network, wherein it communicates with the network node 10 or other network nodes according to defined network communication protocols. The wireless device 12-1 is further configured for Device-to-Device (D2D) communications, wherein it communicates with one or more other wireless devices 12 using defined D2D communication protocols. In a non-limiting example, the wireless device 12-1 comprises a 3GPP User Equipment or UE, and is configured for operation in a 3GPP communication network, such as an LTE-based cellular communication network.

The illustrated network node 10 is configured to implement the network-side processing described above and in the "Example Embodiments" found below. Accordingly, for example, in one embodiment, the network node 10 is configured to determine whether a D2D-capable user equipment (UE) such as wireless device 12-1 is or will be performing a D2D operation and whether the D2D-capable UE is or will be performing a cellular operation, and to adapt an activity/inactivity state configuration for the D2D-capable UE, based on said determining.

Correspondingly, the illustrated wireless device 12-1 in some embodiments is configured to implement the device-side processing discussed above and described in the below "Example Embodiments." In one example, the wireless device 12-1 is configured for operation in communication network and is further configured for D2D communications. In particular, the wireless device 12-1 may be further configured to determine whether wireless device 12-1 is or will be performing a D2D operation and whether the wireless device 12-1 is or will be performing a cellular operation, and to adapt an activity/inactivity state configuration for the wireless device 12-1, based on said determining.

Fig. 8 illustrates example circuit arrangements and it will be understood that the network node 10 and the wireless device 12-1 generally will include digital processing circuits (and associated memory or other computer-readable medium) for storing configuration data, operational or working data, and for storing computer program instructions. In at least some of the examples contemplated herein, the network-side and device-side functionality is realized at least in part through the programmatic configuration of digital processing circuitry, based on the execution by that circuitry of stored computer program instructions.

The example network node 10 includes a communication interface 20, a processing circuit 22 and an associated computer-readable medium (or media) 24 (e.g., one or more types of memory and/or storage devices, such as a mix of volatile, working memory and non-volatile configuration and program memory or storage). Example memory or storage devices include FLASH, EEPROM or Solid State Disk (SSD), for non-volatile storage, and DRAM or SRAM devices for volatile, working memory.

In at least one example, the computer-readable medium 24 stores a computer program 26. In such examples, the network node 10 is at least partly configured to perform the network-side processing operations taught herein, based on its execution of computer program instructions comprising the stored computer program 26. Here, stored means "retained for future electronic retrieval," such as being stored for execution. The tenn thus encompasses retention in either nonvolatile or volatile memory.

Implementation of the communication interface 20 depends on the nature of the network node 10. In example where the network node 10 is an LTE eNodeB or other radio base station, the communication interface 20 comprises radio frequency receiver circuitry 20-1 and radio frequency transmitter circuitry 20-2, for communicating with wireless devices 12 according to defined network communication protocols-i.e., according to defined air interface timing and signaling formats, as used by the type of communication network in which the network node 10 is configured to operate.

In other embodiments, the network node 10 is a control node that communicates with eNodeBs or other radio base stations supporting the operation of wireless devices 12. For example, the network node 10 is a type of operations and maintenance node (O&M). Consider the example of Fig. 9, which identifies the network node 10 using the reference number 10-1 and illustrates the node 10-1 communicating with the wireless device 12-1 via another network node 10-2.

This arrangement contrasts with the example of Fig. 8, which suggests a direct communication with the wireless device 12-1. Fig. 9 also indicates that the network node 10-1 may be in communication with another network node 10-3 (but that fact also holds for the example of Fig. 8). In some examples, the network node 10-1 receives information from other network nodes 10 regarding the activity state(s) of wireless devices 12 with respect to D2D communications, e.g., for wireless devices 12 not being served or controlled by the network node 10-1.

In one or more examples, the communication interface 20 includes more than one type of communication interface. Consider the case where the network node 10 comprises a radio base station. In such cases, the communication interface 20 includes a radio interface (20-1, 20-2) for communicating with wireless devices 12, and further includes an inter-base-station communication interface for communicating with other radio base stations, along with a core network communication interface for communicating with one or more nodes in an associated core network-e.g., for communicating with packet gateways, mobility and authentication management servers, etc. In an LTE example, the communication interface 20 would include an "X2" interface to other eNodeBs, and one or more "S1" interfaces to the LTE core network, which is referred to as an EPC.

The processing circuit 22 comprises, for example, digital processing circuitry that is fixed or programmed to perform network-side processing as taught herein. In one embodiment, the processing circuit 22 comprises one or more microprocessors, Digital Signal Processors (DSPs), ASIC, FPGAs, etc., which are configured according to the teachings herein. In one or more particular examples, the computer-readable medium 24 stores a computer program 26.
Correspondingly, the processing circuit 22 is at least partly configured according to the teachings herein, based on its execution of the computer program instructions comprising the computer program 26.

Turning to the example wireless device 12-1, the device may be a cellular radiotelephone (smartphone, feature phone, etc.), a tablet or laptop computer, a network adaptor, card, modem or other such interface device, or essential device or other apparatus that is configured for wireless communication in the network 10, and further configured for D2D communications. In the 3GPP context, the wireless device 12-1 is referred to as a UE and it will be understood as including a communication interface 30, including a radiofrequency receiver circuitry 30-1 and a radiofrequency transmitter circuitry 30-2. This circuitry and the overall device 12-1 are configured for network communications according to the applicable network communication protocols, and are further configured for D2D communications according to the applicable D2D communication protocols.

The communication interface 30 may comprise a mix of analog and digital circuits. For example, the receiver 30-1 in one or more examples comprises a receiver front-end circuit (not explicitly shown in Fig. 6) that generates one or more streams of digital signal samples corresponding to antenna-received signals, and further includes one or more receiver processing circuits-e.g., baseband digital processing circuitry and associated buffer memory-which operate on the digital samples. Example operations include linearization or other channel compensation, possibly with interference suppression, and symbol demodulation/detection and decoding, for recovering transmitted information.

The wireless device 12-1 further includes a processing circuit 32 that is operatively associated with the communication interface 30. The processing circuit 32 includes or is associated with a computer-readable medium (or media) 34. The computer-readable medium 34 comprises, for example, a mix of volatile, working memory and non-volatile configuration and program memory. Non-limiting examples of the former include Static RAM or SRAM, while non-limiting examples of the latter include FLASH, EEPROM, and SSD storage.

The processing circuit 32 provides, for example, digital baseband processing for the receive (RX) signals and transmit (TX) data and control signals received and transmitted through the communication interface 30. The processing circuit 32 in this regard comprises digital processing circuitry and may be implemented as one or more microprocessors, DSPs, ASICs, FPGAs, etc. More generally, the processing circuit 32 may be implemented using fixed circuitry or programmed circuitry, or a mix of both. In an example example, the computer-readable medium 34 stores a computer program 36. The processing circuit 32 in such examples is at least partly configured according to the teachings herein, based on its execution of the computer program instructions comprising the computer program 36.

Regardless of its particular implementation details, the network node 10 in one embodiment is configured to implement one or more of the methods disclosed above, such as the method illustrated in Figure 6. Likewise, the wireless device 12-1 in some embodiments is configured to implement one or more of the methods disclosed above, such as the method illustrated in Figure 7.

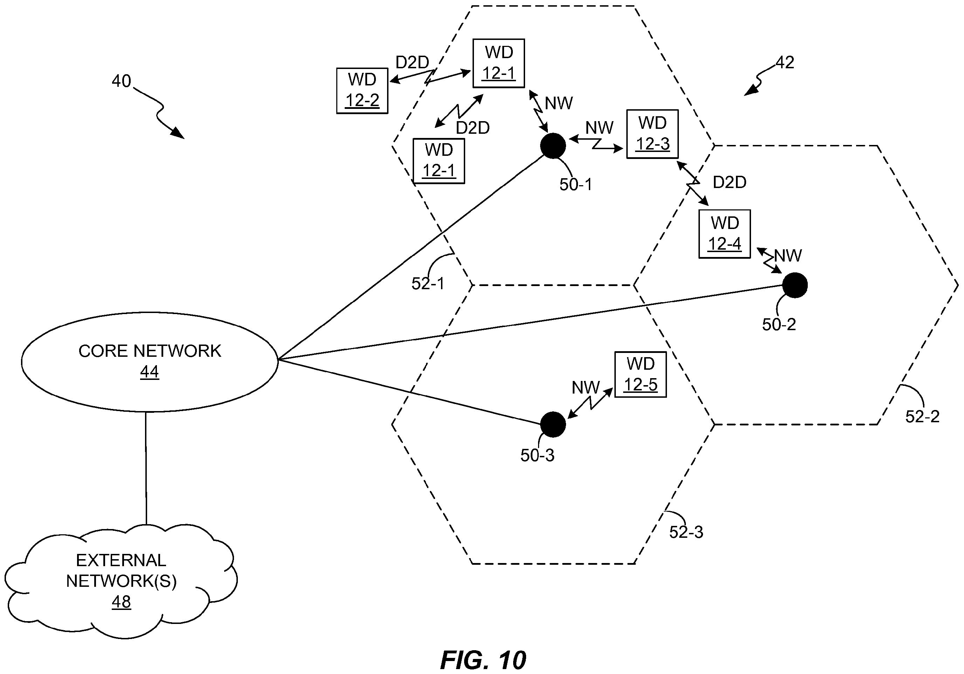

Fig. 10 illustrates an example wireless communication network 40 that includes a Radio Access Network (RAN) 42 and a Core Network (CN) 44. The network 40 communicatively couples wireless devices 12 to one or more external networks 48, such as the Internet or another packet data network. The diagram is simplified for ease of discussion and it will be appreciated that the network 40 may include additional examples of any one or more of the illustrated entities and may include other entities not illustrated. For example, the CN 44 may include Mobility Management Entities or MMEs, Serving Gateways or SGWs, a Packet Gateway or PGW, and one or more other nodes, such as positioning nodes, O&M nodes, etc.

The RAN 42 includes a number of base stations 50-1, 50-2 and 50-3, which in the LTE context are referred to as eNBs or eNodeBs. Unless suffixes are needed for clarity, the reference number "50" will be used to refer to base stations in the singular and plural sense. Each base station 50 uses certain air interface resources-e.g., spectrum, carriers, channels, etc.-to provide service over a given area, referred to as a "cell." Accordingly, in Fig. 11, the base station 50-1 provides a cell 52-1, the base station 50-2 provides a cell 52-2, and the base station 50-3 provides a cell 52-3. Unless suffixes are needed for clarity, the reference number "52" will be used herein to refer to cells in the singular and plural sense.

Of course, a given base station 50 may provide more than one cell 52, e.g., in the case of multi-carrier operation, and the teachings herein are not limited to arrangement of base stations 50 and cells 52 depicted in Fig. 11. For example, the cell sizes may be adaptive or non-uniform. In the latter case, the network 40 may comprise a heterogeneous network where one or more large cells, referred to as "macro" cells are overlaid by one or more smaller cells, referred to a "micro," "pico," or "femto," cells. These smaller cells are provided by low-power access points and may be used as service hotspots that provide higher data rate services and/or may be used to extend or fill in the service coverage provided by the macro cells. In some heterogeneous deployments, the micro cells use the same radio access technology used by the macro cells, e.g., LTE-based micro cells overlaying LTE-based macro cells.

In some examples of the wireless communication network 40, one or more of the base stations 50 operate as the aforementioned network node 10 or 10-1.

The scope of the disclosure is defined by the attached claims.

## Claims

1. A method in a network node (10) configured for operation in a wireless communication network, the method comprising:
determining (610) whether a device-to-device-capable, D2D-capable, user equipment, UE, (12-1) is or will be performing a D2D operation based on at least a report, received from the D2D-capable UE (12-1), indicating that one or more additional D2D UEs have been discovered by the D2D-capable UE (12-1) and whether the D2D-capable UE (12-1) is or will be performing a cellular operation;
adapting (620) an activity/inactivity state configuration for the D2D-capable UE (12-1), based on said determining (610),
wherein adapting (620) the activity/inactivity state configuration comprises configuring discontinuous reception, DRX, for the D2D operation and for the cellular operation, and
wherein adapting (620) the activity/inactivity state configuration further comprises aligning active state periods for the D2D operation and the cellular operation so that the active state periods for the D2D operation and the cellular operation overlap at least in part;
determining (640) whether the D2D-capable UE (12-1) with the adapted activity/inactivity state configuration has stopped or will stop performing the D2D operation and/or the cellular operation; and
in response to said determining (640), deconfiguring or reconfiguring the adapted activity/inactivity state configuration for the D2D-capable UE (12-1),
wherein deconfiguring or reconfiguring the adapted activity/inactivity state configuration comprises deconfiguring the DRX resulting in a continuous reception by the D2D-capable UE (12-1).

2. The method of claim 1, wherein said adapting (620) is carried out based on determining (610) that the D2D-capable UE (12-1) is or will be performing the D2D operation and is or will be performing the cellular operation.

3. The method of claim 1 or 2, wherein determining (610) whether the D2D-capable UE (12-1) will be performing the D2D operation comprises determining whether the D2D-capable UE (12-1) will be performing the D2D operation within a first predetermined time interval, wherein determining (610) whether the D2D-capable UE (12-1) will be performing the cellular operation comprises determining whether the D2D-capable UE (12-1) will be performing the cellular operation within a second predetermined time interval, and wherein the first predetermined time interval and the second predetermined time interval may or may not be the same.

4. The method of any of claims 1-3, further comprising signaling (630) an indication of the adapted activity/inactivity state configuration to the D2D-capable UE (12-1), and/or, further comprising signaling (630) an indication of the adapted activity/inactivity state configuration to another network node.

5. The method of any of claims 1-4, wherein said determining (610) whether the D2D-capable UE (12-1) is or will be performing the D2D operation is based on one or more of:
an implicit or explicit indication received from one or more of the D2D-capable UE (12-1), a second D2D UE, and another network node;
an indication that the D2D-capable UE (12-1) is within a certain interest group for which the D2D operation is ongoing or will start;
radio measurements;
a resource request or service request for the D2D operation received from the D2D-capable UE (12-1); and
scheduling information for the D2D operation for the D2D-capable UE (12-1).

6. The method of any of claims 1-5, wherein said determining (610) whether the D2D-capable UE (12-1) is or will be performing the cellular operation is based on one or more of:
scheduling information for the cellular operation for the D2D-capable UE (12-1);
a pattern of cellular activity between the D2D-capable UE (12-1) and the network node (10);
historical data or previously detected activity levels on a link between the D2D-capable UE (12-1) and the wireless communication network;
an unfinished on-going cellular operation;
a measurement configuration of the D2D-capable UE (12-1);
a request from the D2D-capable UE (12-1) to the wireless communication network;
information derived from Radio Resource Management functions in the wireless communication network; and
an indication received from another D2D UE that is performing or is configured to perform D2D communication with the D2D-capable UE (12-1).

7. A method in a wireless communication network, the wireless communication network comprising a network node (10) and a device-to-device capable, D2D-capable, user equipment, UE, (12-1), the method comprising:
determining (610), by the network node (10), whether the D2D-capable UE (12-1) is or will be performing a D2D operation based on at least a report, received from the D2D-capable UE (12-1), indicating that one or more additional D2D UEs have been discovered by the D2D-capable UE (12-1) and whether the D2D-capable UE (12-1) is or will be performing a cellular operation;
adapting (620), by the network node (10), an activity/inactivity state configuration for the D2D-capable UE (12-1), based on said determining (610), wherein adapting (620) the activity/inactivity state configuration comprises:
configuring discontinuous reception, DRX, for the D2D operation and for the cellular operation, and
aligning active state periods for the D2D operation and the cellular operation so that the active state periods for the D2D operation and the cellular operation overlap at least in part;
determining (640), by the network node (10), whether the D2D-capable UE (12-1) with the adapted activity/inactivity state configuration has stopped or will stop performing the D2D operation and/or the cellular operation;
in response to said determining (640), deconfiguring or reconfiguring, by the network node (10), the adapted activity/inactivity state configuration for the D2D-capable UE (12-1),
wherein deconfiguring or reconfiguring the adapted activity/inactivity state configuration comprises deconfiguring the DRX resulting in a continuous reception by the D2D-capable UE (12-1);
receiving a request, by the D2D-capable UE (12-1) from the network node (10), to perform the D2D operation;
determining (710), by the D2D-capable UE (12-1), whether the D2D-capable UE (12-1) is or will be performing the D2D operation based at least on a discovery, by the D2D-capable UE (12-1), of another D2D UE with which the D2D-capable UE (12-1) can perform the D2D operation and whether the D2D-capable UE (12-1) is or will be performing the cellular operation;
adapting (720), by the D2D-capable UE (12-1), the activity/inactivity state configuration for the D2D-capable UE (12-1), based on said determining (710),
wherein adapting (720) the activity/inactivity state configuration comprises configuring the DRX for the D2D operation and for the cellular operation, and
wherein adapting (720) the activity/inactivity state configuration further comprises aligning the active state periods for the D2D operation and the cellular operation so that the active state periods for the D2D operation and the cellular operation overlap at least in part;
determining (740), by the D2D-capable UE (12-1), whether the D2D-capable UE (12-1) with the adapted activity/inactivity state configuration has stopped or will stop performing the D2D operation and/or the cellular operation; and
in response to said determining (740), deconfiguring or reconfiguring the adapted activity/inactivity state configuration for the D2D-capable UE (12-1),
wherein deconfiguring or reconfiguring the adapted activity/inactivity state configuration comprises deconfiguring the DRX resulting in the continuous reception by the D2D-capable UE (12-1).

8. The method of claim 7, wherein said adapting (720) is carried out based on determining (710) that the D2D-capable UE (12-1) is or will be performing the D2D operation and is or will be performing the cellular operation; and/or, wherein determining (710) whether the D2D-capable UE (12-1) will be performing the D2D operation comprises determining whether the D2D-capable UE (12-1) will be performing the D2D operation within a first predetermined time interval, wherein determining (710) whether the D2D-capable UE (12-1) will be performing the cellular operation comprises determining whether the D2D-capable UE (12-1) will be performing the cellular operation within a second predetermined time interval, and wherein the first and second predetermined time intervals may or may not be the same.

9. The method of any of claims 7 or 8, further comprising signaling (730) an indication of the adapted activity/inactivity state configuration to the another D2D UE; and/or, further comprising signaling an indication of the adapted activity/inactivity state configuration to the network node (10) in the wireless communication network.

10. The method of any of claims 7 to 9, wherein said determining (710) whether the D2D-capable UE (12-1) is or will be performing the D2D operation is based on one or more of:
scheduling of the D2D operation in the D2D-capable UE (12-1);
receipt of a request from the another D2D UE for establishing the D2D operation;
receipt of a request for performing the D2D operation from the network node (10);
determining that the D2D-capable UE (12-1) is out of coverage of the network node (10);
determining that a signal quality measured on signals transmitted by the network node (10) falls below a threshold; and
determining that the D2D-capable UE (12-1) has lost synchronization with a second D2D UE; and/or,
wherein said determining (710) whether the D2D-capable UE (12-1) is or will be performing the cellular operation is based on one or more of:
scheduling information for the cellular operation in the D2D-capable UE (12-1);
an unfinished on-going cellular operation;
a measurement configuration of the D2D-capable UE (12-1);
receipt of a request for performing the cellular operation from the another D2D UE;
a pattern of the cellular operation;
a determination that new signal measurement result(s) are available in the D2D-capable UE (12-1);
a determination that a signal quality measured on signals transmitted by the network node (10) falls below a threshold;
a determination that the D2D-capable UE (12-1) has lost synchronization with the another D2D UE;
a determination that the D2D-capable UE (12-1) is unable to perform and/or maintain the D2D operation with the another D2D UE.

11. The method of any of claims 1-10, wherein adapting the activity/inactivity state configuration further comprises adapting any one or more of:
a DRX configuration;
a DRX period;
an active time;
an on-duration;
an inactivity time;
a discontinuous transmit, DTX, configuration;
a DTX cycle time;
a DTX ON duration; and
a DTX OFF duration;
and/or wherein adapting the activity/inactivity state configuration further comprises one or more of:
c onfiguring orthogonal DRX ON periods for the cellular and D2D operations;
c onfiguring joint DRX ON period for the cellular and D2D operations, wherein the D2D and cellular operations may or may not overlap in time;
c onfiguring the activity/inactivity state configuration to minimize a total active time of the D2D-capable UE (12-1); and
c onfiguring a first DRX cycle and a second DRX cycle for operations on a D2D link and UE-to-network link, respectively, wherein the first DRX cycle and the second DRX cycle are related to by a relation; and/or;
wherein said adapting accounts for a capability or preference of the D2D-capable UE (12-1), the capability or preference comprising one or more of:
that orthogonal DRX ON periods are preferred for UEs not capable of simultaneous D2D and cellular operations in general or for certain type of operations;
that orthogonal DRX ON periods are preferred for UEs with one transmit branch;
that orthogonal DRX ON periods are preferred for UEs that may cause interruptions when switching between the D2D and cellular operations;
that aligned DRX ON periods may be preferred for UEs that are capable of simultaneous D2D and cellular operations either in general or for the type of operation being performed;
the D2D-capable UE's (12-1) capability for simultaneous D2D operation and cellular operation;
the D2D-capable UE's (12-1) carrier aggregation, CA, capability;
a number of transmit/receive antennas in the D2D-capable UE (12-1) that may be used for the D2D operation and/or the cellular operation;
a transmit power related capability of the D2D-capable UE (12-1);
a receive power-related capability of the D2D-capable UE (12-1);
whether the D2D-capable UE (12-1) can also operate on one or more non-cellular systems in parallel with the D2D operation; and
whether the D2D-capable UE (12-1) needs to interrupt reception and/or transmission of signals when performing transition or switching between operations on a D2D link and on a UE-to-network link.

12. A network node (10) configured for operation in a wireless communication network, said network node (10) comprising:
a communication interface (20) configured to communicate with wireless devices operating in the wireless communication network and/or to communicate with one or more other network nodes; and
a processing circuit (22) operatively associated with the communication interface (20) and configured to:
determine whether a device-to-device capable, D2D-capable, user equipment, UE, (12-1) is or will be performing a D2D operation based at least on a report, received from the D2D-capable UE (12-1), indicating that one or more additional D2D UEs have been discovered by the D2D-capable UE (12-1) and whether the D2D-capable UE (12-1) is or will be performing a cellular operation;
adapt an activity/inactivity state configuration for the D2D-capable UE (12-1), based on said determination,
wherein the processing circuit (22) is configured to adapt the activity/inactivity state configuration by:
configuring discontinuous reception, DRX, for the D2D operation and for the cellular operation, and
aligning active state periods for the D2D operation and the cellular operation so that the active state periods for the D2D operation and the cellular operation overlap at least in part;
determine whether the D2D-capable UE (12-1) with the adapted activity/inactivity state configuration has stopped or will stop performing the D2D operation and/or the cellular operation; and
in response to said determination, deconfigure or reconfigure the adapted activity/inactivity state configuration for the D2D-capable UE (12-1),
wherein the deconfiguration or reconfiguration of the adapted activity/inactivity state configuration comprises deconfiguration of the DRX resulting in a continuous reception by the D2D-capable UE (12-1).

13. The network node (10) of claim 12, wherein the network node (10) is configured to perform processing operations implementing any of the methods of claims 2-6.

14. A wireless communication network comprising a network node (10) and a device-to-device capable, D2D-capable, user equipment, UE, (12-1), wherein:
the network node (10) comprises:
a communication interface (20) configured to communicate with wireless devices operating in the wireless communication network and/or to communicate with one or more other network nodes; and
a processing circuit (22) operatively associated with the communication interface (20) and configured to:
determine whether the D2D-capable UE (12-1) is or will be performing a D2D operation based at least on a report, received from the D2D-capable UE (12-1), indicating that one or more additional D2D UEs have been discovered by the D2D-capable UE (12-1) and whether the D2D-capable UE (12-1) is or will be performing a cellular operation;
adapt an activity/inactivity state configuration for the D2D-capable UE (12-1), based on said determination, wherein the processing circuit (22) is configured to adapt the activity/inactivity state configuration by:
configuring discontinuous reception, DRX, for the D2D operation and for the cellular operation, and
aligning active state periods for the D2D operation and the cellular operation so that the active state periods for the D2D operation and the cellular operation overlap at least in part;
determine whether the D2D-capable UE (12-1) with the adapted activity/inactivity state configuration has stopped or will stop performing the D2D operation and/or the cellular operation; and
in response to said determination, deconfigure or reconfigure the adapted activity/inactivity state configuration for the D2D-capable UE (12-1),
wherein the deconfiguration or reconfiguration of the adapted activity/inactivity state
configuration comprises deconfiguration of the DRX resulting in a
continuous reception by the D2D-capable UE (12-1); and
the D2D-capable UE (12-1) comprises:
a communication interface (30) that is configured for communicating with the wireless communication network, according to defined network communication protocols, and configured for communicating with one or more other wireless devices via D2D communications, according to defined D2D communication protocols; and
a processing circuit (32) that is operatively associated with the communication interface (30) and configured to:
receive a request from the network node (10), to perform the D2D operation;
determine whether the D2D-capable UE (12-1) is or will be performing the D2D operation based at least on a discovery, by the D2D-capable UE (12-1), of another D2D UE with which the D2D-capable UE (12-1) can perform the D2D operation and whether the D2D-capable UE (12-1) is or will be performing the cellular operation; and
adapt the activity/inactivity state configuration for the D2D-capable UE (12-1), based on said determination;
wherein the processing circuit (32) is configured to adapt the activity/inactivity state configuration by:
configuring the DRX for the D2D operation and for the cellular operation, and
aligning the active state periods for the D2D operation and the cellular operation so that the active state periods for the D2D operation and the cellular operation overlap at least in part;
determine whether the D2D-capable UE (12-1) with the adapted activity/inactivity state configuration has stopped or will stop performing the D2D operation and/or the cellular operation; and
in response to said determination, deconfigure or reconfigure the adapted activity/inactivity state configuration for the D2D-capable UE (12-1),
wherein the deconfiguration or reconfiguration of the adapted activity/inactivity state configuration comprises deconfiguration of the DRX resulting in the continuous reception by the D2D-capable UE (12-1).

15. The wireless communication network of claim 14, wherein the processing circuit (32) is further configured to carry out processing operations implementing the method of any of claims 8-11.

## Patentansprüche

1. Verfahren in einem Netzwerkknoten (10), der für den Betrieb in einem drahtlosen Kommunikationsnetzwerk konfiguriert ist, wobei das Verfahren umfasst:
Bestimmen (610), ob ein Gerät-zu-Gerät-fähiges, D2D-fähiges, Benutzergerät, UE, (12-1) einen D2D-Betrieb durchführt oder durchführen wird, basierend zumindest auf einem von dem D2D-fähigen UE (12-1) empfangenen Bericht, der anzeigt, dass ein oder mehrere zusätzliche D2D-UEs von dem D2D-fähigen UE (12-1) entdeckt wurden und ob das D2D-fähige UE (12-1) einen zellularen Betrieb durchführt oder durchführen wird;
Anpassen (620) einer Aktivitäts-/Inaktivitäts-Zustandskonfiguration für das D2D-fähige UE (12-1), basierend auf dem Bestimmen (610),
wobei das Anpassen (620) der Aktivitäts-/Inaktivitäts-Zustandskonfiguration das Konfigurieren eines diskontinuierlichen Empfangs, DRX, für den D2D-Betrieb und für den zellularen Betrieb umfasst, und
wobei das Anpassen (620) der Aktivitäts-/Inaktivitäts-Zustandskonfiguration ferner das Ausrichten von aktiven Zustandsperioden für den D2D-Betrieb und den zellularen Betrieb derart umfasst, dass sich die aktiven Zustandsperioden für den D2D-Betrieb und den zellularen Betrieb zumindest teilweise überlappen;
Bestimmen (640), ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird; und
als Reaktion auf das Bestimmen (640), Dekonfigurieren oder Rekonfigurieren der angepassten Aktivitäts-/Inaktivitäts-Zustandskonfiguration für das D2D-fähige UE (12-1),
wobei das Dekonfigurieren oder Rekonfigurieren der angepassten Aktivitäts-/Inaktivitäts-Zustandskonfiguration das Dekonfigurieren des DRX umfasst, was zu einem kontinuierlichen Empfang durch das D2D-fähige UE (12-1) führt.

2. Verfahren nach Anspruch 1, wobei das Anpassen (620) basierend auf dem Bestimmen (610) ausgeführt wird, dass das D2D-fähige UE (12-1) den D2D-Betrieb und den zellularen Betrieb durchführt oder durchführen wird.

3. Verfahren nach Anspruch 1 oder 2, wobei das Bestimmen (610), ob das D2D-fähige UE (12-1) den D2D-Betrieb durchführen wird, das Bestimmen umfasst, ob das D2D-fähige UE (12-1) den D2D-Betrieb innerhalb eines ersten vorbestimmten Zeitintervalls durchführen wird, wobei das Bestimmen (610), ob das D2D-fähige UE (12-1) den zellularen Betrieb durchführen wird, das Bestimmen umfasst, ob das D2D-fähige UE (12-1) den zellularen Betrieb innerhalb eines zweiten vorbestimmten Zeitintervalls durchführen wird, und wobei das erste vorbestimmte Zeitintervall und das zweite vorbestimmte Zeitintervall dasselbe sein können oder auch nicht.

4. Verfahren nach einem der Ansprüche 1 bis 3, ferner umfassend das Signalisieren (630) einer Anzeige der angepassten Aktivitäts-/Inaktivitäts-Zustandskonfiguration an das D2D-fähige UE (12-1) und/oder ferner umfassend das Signalisieren (630) einer Anzeige der angepassten Aktivitäts-/Inaktivitäts-Zustandskonfiguration an einen weiteren Netzwerkknoten.

5. Verfahren nach einem der Ansprüche 1 bis 4, wobei das Bestimmen (610), ob das D2D-fähige UE (12-1) den D2D-Betrieb durchführt oder durchführen wird, auf einem oder mehreren basiert von:
einer impliziten oder expliziten Anzeige, die von einem oder mehreren von dem D2D-fähigen UE (12-1), einem zweiten D2D-UE und einem weiteren Netzwerkknoten empfangen wird;
einer Anzeige, dass das D2D-fähige UE (12-1) innerhalb einer bestimmten Interessengruppe ist, für die der D2D-Betrieb läuft oder beginnen wird;
Funkmessungen;
einer von dem D2D-fähigen UE (12-1) empfangenen Ressourcenanforderung oder Dienstanforderung für den D2D-Betrieb; und
Planungsinformationen für den D2D-Betrieb für das D2D-fähige UE (12-1).

6. Verfahren nach einem der Ansprüche 1 bis 5, wobei die Bestimmung (610), ob das D2D-fähige UE (12-1) den zellularen Betrieb durchführt oder durchführen wird, auf einem oder mehreren basiert von:
Planungsinformationen für den zellularen Betrieb für das D2D-fähige UE (12-1); einem Muster der zellularen Aktivität zwischen dem D2D-fähigen UE (12-1) und dem Netzwerkknoten (10);
historische Daten oder zuvor erfassten Aktivitätsgraden auf einer Verbindung zwischen dem D2D-fähigen UE (12-1) und dem drahtlosen Kommunikationsnetzwerk;
einem nicht beendeten, laufenden zellularen Betrieb;
einer Messkonfiguration des D2D-fähigen UE (12-1); einer Anforderung von dem D2D-fähigen UE (12-1) an das drahtlose Kommunikationsnetzwerk;
Informationen, die von Funkressourcen-Management-Funktionen in dem drahtlosen Kommunikationsnetzwerk abgeleitet werden; und
einer Anzeige, die von einem weiteren D2D-UE empfangen wird, das eine D2D-Kommunikation mit dem D2D-fähigen UE (12-1) durchführt oder dafür konfiguriert ist.

7. Verfahren in einem drahtlosen Kommunikationsnetzwerk, wobei das drahtlose Kommunikationsnetzwerk einen Netzwerkknoten (10) und ein Gerät-zu-Gerät-fähiges, D2D-fähiges, Benutzergerät, UE, (12-1) umfasst, wobei das Verfahren umfasst:
Bestimmen (610), durch den Netzwerkknoten (10), ob das D2D-fähige UE (12-1) einen D2D-Betrieb durchführt oder durchführen wird, basierend zumindest auf einem von dem D2D-fähigen UE (12-1) empfangenen Bericht, der anzeigt, dass ein oder mehrere zusätzliche D2D-UEs von dem D2D-fähigen UE (12-1) entdeckt wurden und ob das D2D-fähige UE (12-1) einen zellularen Betrieb durchführt oder durchführen wird;
Anpassen (620) einer Aktivitäts-/Inaktivitäts-Zustandskonfiguration für das D2D-fähige UE (12-1) durch den Netzwerkknoten (10), basierend auf dem Bestimmen (610), wobei das Anpassen (620) der Aktivitäts-/Inaktivitäts-Zustandskonfiguration umfasst:
Konfigurieren des diskontinuierlichen Empfangs, DRX, für den D2D-Betrieb und für den zellularen Betrieb, und
Ausrichten der aktiven Zustandsperioden für den D2D-Betrieb und den zellularen Betrieb derart, dass sich die aktiven Zustandsperioden für den D2D-Betrieb und den zellularen Betrieb zumindest teilweise überlappen;
Bestimmen (640), durch den Netzwerkknoten (10), ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird;
als Reaktion auf das Bestimmen (640), Dekonfigurieren oder Rekonfigurieren der angepassten Aktivitäts-/Inaktivitäts-Zustandskonfiguration für das D2D-fähige UE (12-1) durch den Netzwerkknoten (10),
wobei das Dekonfigurieren oder Rekonfigurieren der angepassten Aktivitäts-/Inaktivitäts-Zustandskonfiguration das Dekonfigurieren des DRX umfasst, was zu einem kontinuierlichen Empfang durch das D2D-fähige UE (12-1) führt;
Empfangen einer Anforderung durch das D2D-fähige UE (12-1) von dem Netzwerkknoten (10), den D2D-Betrieb durchzuführen;
Bestimmen (710), durch das D2D-fähige UE (12-1), ob das D2D-fähige UE (12-1) den D2D-Betrieb durchführt oder durchführen wird, basierend zumindest auf einer Entdeckung, von dem D2D-fähige UE (12-1), eines weiteren D2D-UE, mit dem das D2D-fähige UE (12-1) den D2D-Betrieb durchführen kann, und ob das D2D-fähige UE (12-1) den zellularen Betrieb durchführt oder durchführen wird;
Anpassen (720), durch das D2D-fähige UE (12-1), der Aktivitäts-/Inaktivitäts-Zustandskonfiguration für das D2D-fähige UE (12-1), basierend auf dem Bestimmen (710),
wobei das Anpassen (720) der Aktivitäts-/Inaktivitäts-Zustandskonfiguration das Konfigurieren des DRX für den D2D-Betrieb und für den zellularen Betrieb umfasst, und
wobei das Anpassen (720) der Aktivitäts-/Inaktivitäts-Zustandskonfiguration ferner das Ausrichten der aktiven Zustandsperioden für den D2D-Betrieb und den zellularen Betrieb derart umfasst, dass sich die aktiven Zustandsperioden für den D2D-Betrieb und den zellularen Betrieb zumindest teilweise überlappen;
Bestimmen (740), durch das D2D-fähige UE (12-1), ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird; und
als Reaktion auf das Bestimmen (740), Dekonfigurieren oder Rekonfigurieren der angepassten Aktivitäts-/Inaktivitäts-Zustandskonfiguration für das D2D-fähige UE (12-1),
wobei das Dekonfigurieren oder Rekonfigurieren der angepassten Aktivitäts-/Inaktivitäts-Zustandskonfiguration das Dekonfigurieren des DRX umfasst, was zu dem kontinuierlichen Empfang durch das D2D-fähige UE (12-1) führt.

8. Verfahren nach Anspruch 7, wobei das Anpassen (720) basierend auf dem Bestimmen (710) ausgeführt wird, dass das D2D-fähige UE (12-1) den D2D-Betrieb durchführt oder durchführen wird und den zellularen Betrieb durchführt oder durchführen wird; und/oder,
wobei das Bestimmen (710), ob das D2D-fähige UE (12-1) den D2D-Betrieb durchführen wird, das Bestimmen umfasst, ob das D2D-fähige UE (12-1) den D2D-Betrieb innerhalb eines ersten vorbestimmten Zeitintervalls durchführen wird, wobei das Bestimmen (710), ob das D2D-fähige UE (12-1) den zellularen Betrieb durchführen wird, das Bestimmen umfasst, ob das D2D-fähige UE (12-1) den zellularen Betrieb innerhalb eines zweiten vorbestimmten Zeitintervalls durchführen wird, und wobei das erste und das zweite vorbestimmte Zeitintervall dasselbe sein können oder auch nicht.

9. Verfahren nach einem der Ansprüche 7 oder 8, ferner umfassend das Signalisieren (730) einer Anzeige der angepassten Aktivitäts-/Inaktivitäts-Zustandskonfiguration an das weitere D2D-UE; und/oder ferner umfassend das Signalisieren einer Anzeige der angepassten Aktivitäts-/Inaktivitäts-Zustandskonfiguration an den Netzwerkknoten (10) in dem drahtlosen Kommunikationsnetzwerk.

10. Verfahren nach einem der Ansprüche 7 bis 9, wobei das Bestimmen (710), ob das D2D-fähige UE (12-1) den D2D-Betrieb durchführt oder durchführen wird, auf einem oder mehreren basiert von:
Planen des D2D-Betriebs in dem D2D-fähigen UE (12-1);
einem Empfang einer Anforderung von dem weiteren D2D-UE zum Einrichten des D2D-Betriebs;
einem Empfang einer Anforderung zum Durchführen des D2D-Betriebs von dem Netzwerkknoten (10);
Bestimmen, dass das D2D-fähige UE (12-1) sich außerhalb der Reichweite des Netzwerkknotens (10) befindet;
Bestimmen, dass eine gemessene Signalqualität von Signalen, die von dem Netzwerkknoten (10) gesendet werden, unter einen Schwellenwert fällt; und
Bestimmen, dass das D2D-fähige UE (12-1) die Synchronisation mit einem zweiten D2D-UE verloren hat;
und/oder,
wobei das Bestimmen (710), ob das D2D-fähige UE (12-1) den zellularen Betrieb durchführt oder durchführen wird, auf einem oder mehreren basiert von:
Planen von Informationen für den zellularen Betrieb in dem D2D-fähigen UE (12-1);
einem nicht beendeten, laufenden zellularen Betrieb;
einer Messkonfiguration des D2D-fähigen UE (12-1);
einem Empfang einer Anforderung zum Durchführen des zellularen Betriebs von dem weiteren D2D-UE;
einem Muster des zellularen Betriebs;
einer Bestimmung, dass neue Signalmessergebnisse in dem D2D-fähigen UE (12-1) verfügbar sind (12-1);
einer Bestimmung, dass eine gemessene Signalqualität von Signalen, die von dem Netzwerkknoten (10) gesendet werden, unter einen Schwellenwert fällt;
einer Bestimmung, dass das D2D-fähige UE (12-1) die Synchronisation mit dem weiteren D2D-UE verloren hat;
einer Bestimmung, dass das D2D-fähige UE (12-1) nicht in der Lage ist, den D2D-Betrieb mit dem weiteren D2D-UE durchzuführen und/oder aufrechtzuerhalten.

11. Verfahren nach einem der Ansprüche 1 bis 10, wobei das Anpassen der Aktivitäts-/Inaktivitäts-Zustandskonfiguration ferner das Anpassen von einem oder mehreren umfasst von:
einer DRX-Konfiguration;
einer DRX-Periode;
einer aktiven Zeit;
einer Einschaltdauer;
einer Inaktivitätszeit;
einer diskontinuierlichen Sende, DTX, -Konfiguration;
einer DTX-Zykluszeit;
einer DTX-EIN-Dauer; und
einer DTX-AUS-Dauer;
und/oder wobei das Anpassen der Aktivitäts-/Inaktivitäts-Zustandskonfiguration ferner eines oder mehreres umfasst von:
Konfigurieren orthogonaler DRX-EIN-Perioden für den zellularen Betrieb und D2D-Betrieb;
Konfigurieren einer gemeinsamen DRX-EIN-Periode für den zellularen Betrieb und D2D-Betrieb, wobei der D2D-Betrieb und zellulare Betrieb sich zeitlich überlappen können oder auch nicht;
Konfigurieren der Aktivitäts-/Inaktivitäts-Zustandskonfiguration, um eine Gesamtaktivzeit des D2D-fähigen UE (12-1) zu minimieren; und
Konfigurieren eines ersten DRX-Zyklus und eines zweiten DRX-Zyklus für Betriebe auf einer D2D-Verbindung bzw. einer UE-zu-Netzwerk-Verbindung, wobei der erste DRX-Zyklus und der zweite DRX-Zyklus durch eine Zuordnung zugeordnet werden; und/oder;
wobei das Anpassen eine Fähigkeit oder Präferenz des D2D-fähigen UE (12-1) berücksichtigt, wobei die Fähigkeit oder
Präferenz eines oder mehreres umfasst von:
dass orthogonale DRX-EIN-Perioden für UEs bevorzugt werden, die nicht zum gleichzeitigen D2D-Betrieb und zellularen Betrieb im Allgemeinen oder für bestimmte Arten von Betrieben in der Lage sind;
dass orthogonale DRX-EIN-Perioden für UEs mit einem Sendezweig bevorzugt werden;
dass orthogonale DRX-EIN-Perioden für UEs bevorzugt werden, die beim Umschalten zwischen dem D2D-Betrieb und dem zellularen Betrieb Unterbrechungen verursachen können;
dass ausgerichtete DRX-ON-Perioden für UEs bevorzugt werden können, die in der Lage sind, D2D-Betrieb und zellularen Betrieb entweder im Allgemeinen oder für die Art des Betriebs gleichzeitig durchzuführen;
der Fähigkeit des D2D-fähigen UE (12-1) zum gleichzeitigen D2D-Betrieb und zellularen Betrieb;
der Fähigkeit des D2D-fähigen UE (12-1) zur Trägeraggregation (CA);
einer Anzahl von Sende-/Empfangsantennen in dem D2D-fähigen UE (12-1), die für den D2D-Betrieb und/oder den zellularen Betrieb verwendet werden können;
einer sendeleistungsbezogenen Fähigkeit des D2D-fähigen UE (12-1);
einer auf die empfangsleistungsbezogenen Fähigkeit des D2D-fähigen UE (12-1);
ob das D2D-fähige UE (12-1) auch auf einem oder mehreren nicht-zellularen Systemen parallel zum D2D-Betrieb arbeiten kann; und
ob das D2D-fähige UE (12-1) den Empfang und/oder die Sendung von Signalen unterbrechen muss, wenn es einen Übergang oder einen Wechsel zwischen Betrieben auf einer D2D-Verbindung und auf einer UE-zu-Netzwerk-Verbindung durchführt.

12. Netzwerkknoten (10), der für den Betrieb in einem drahtlosen Kommunikationsnetzwerk konfiguriert ist, wobei der Netzwerkknoten (10) umfasst:
eine Kommunikationsschnittstelle (20), die dazu konfiguriert ist, mit drahtlosen Geräten, die in dem drahtlosen Kommunikationsnetzwerk arbeiten, zu kommunizieren und/oder mit einem oder mehreren anderen Netzwerkknoten zu kommunizieren; und
eine Verarbeitungsschaltung (22), die der Kommunikationsschnittstelle (20) operativ zugeordnet ist und konfiguriert ist, um:
zu bestimmen, ob ein Gerät-zu-Gerät-fähiges, D2D-fähiges, Benutzergerät, UE, (12-1) einen D2D-Betrieb durchführt oder durchführen wird, basierend zumindest auf einem von dem D2D-fähigen UE (12-1) empfangenen Bericht, der anzeigt, dass ein oder mehrere zusätzliche D2D-UEs von dem D2D-fähigen UE (12-1) entdeckt wurden und ob das D2D-fähige UE (12-1) einen zellularen Betrieb durchführt oder durchführen wird;
eine Aktivitäts-/Inaktivitäts-Zustandskonfiguration für das D2D-fähige UE (12- 1) basierend auf dieser Bestimmung anzupassen,
wobei die Verarbeitungsschaltung (22) dazu konfiguriert ist, die Aktivitäts-/Inaktivitäts-Zustandskonfiguration anzupassen durch:
Konfigurieren eines diskontinuierlichem Empfangs, DRX, für den D2D-Betrieb und für den zellularen Betrieb, und
Ausrichten der aktiven Zustandsperioden für den D2D-Betrieb und den zellularen Betrieb derart, dass sich die aktiven Zustandsperioden für den D2D-Betrieb und den zellularen Betrieb zumindest teilweise überlappen;
Bestimmen, ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird; und
als Reaktion auf die Bestimmung, Dekonfigurieren oder Rekonfigurieren der angepassten Aktivitäts-/Inaktivitäts-Zustandskonfiguration für das D2D-fähige UE (12-1),
wobei die Dekonfiguration oder Rekonfiguration der angepassten Aktivitäts-/Inaktivitäts-Zustandskonfiguration eine Dekonfiguration der DRX umfasst, was zu einem kontinuierlichen Empfang durch das D2D-fähige UE (12-1).

13. Netzwerkknoten (10) nach Anspruch 12, wobei der Netzknoten (10) dazu konfiguriert ist, Verarbeitungsvorgänge durchzuführen, die ein Verfahren nach einem der Ansprüche 2 bis 6 implementieren.

14. Drahtloses Kommunikationsnetzwerk, umfassend einen Netzwerkknoten (10) und ein Gerät-zu-Gerät-fähiges, D2D-fähiges, Benutzergerät, UE, (12-1), wobei:
der Netzwerkknoten (10) umfasst:
eine Kommunikationsschnittstelle (20), die dazu konfiguriert ist, mit drahtlosen Geräten zu kommunizieren, die in dem drahtlosen Kommunikationsnetzwerk arbeiten und/oder mit einem oder mehreren anderen Netzwerkknoten zu kommunizieren; und eine Verarbeitungsschaltung (22), die der Kommunikationsschnittstelle (20) operativ zugeordnet und konfiguriert ist, um:
zu bestimmen, ob das D2D-fähige UE (12-1) einen D2D-Betrieb durchführt oder durchführen wird, basierend zumindest auf einem von dem D2D-fähigen UE (12-1) empfangenen Bericht, der anzeigt, dass ein oder mehrere zusätzliche D2D-UEs von dem D2D-fähigen UE (12-1) entdeckt worden sind, und ob das D2D-fähige UE (12-1) einen zellularen Betrieb durchführt oder durchführen wird;
eine Aktivitäts-/Inaktivitäts-Zustandskonfiguration für das D2D-fähige UE (12- 1) basierend auf der Bestimmung anzupassen, wobei die Verarbeitungsschaltung (22) dazu konfiguriert ist, die Aktivitäts-/Inaktivitäts-Zustandskonfiguration anzupassen durch:
Konfigurieren eines diskontinuierlichem Empfangs, DRX, für den D2D-Betrieb und für den zellularen Betrieb, und
Ausrichten von aktiven Zustandsperioden für den D2D-Betrieb und den zellularen Betrieb derart, dass sich die aktiven Zustandsperioden für den D2D-Betrieb und den zellularen Betrieb zumindest teilweise überlappen;
Bestimmen, ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird; und
als Reaktion auf die Bestimmung die angepasste, Dekonfigurieren oder Rekonfigurieren der Aktivitäts-/Inaktivitäts-Zustandskonfiguration für das D2D-fähige UE (12-1),
wobei die Dekonfiguration oder Rekonfiguration der angepassten Aktivitäts-/Inaktivitäts-Zustandskonfiguration eine Dekonfiguration des DRX umfasst, was zu einem kontinuierlichen Empfang durch das D2D-fähige UE (12-1) führt; und
das D2D-fähige UE (12-1) umfasst:
eine Kommunikationsschnittstelle (30), die zum Kommunizieren mit dem drahtlosen Kommunikationsnetzwerk gemäß definierten Netzwerk-Kommunikationsprotokollen konfiguriert ist und zum Kommunizieren mit einem oder mehreren anderen drahtlosen Geräten über D2D-Kommunikation gemäß den definierten D2D-Kommunikationsprotokollen konfiguriert ist; und
eine Verarbeitungsschaltung (32), die der Kommunikationsschnittstelle (30) operativ zugeordnet ist und konfiguriert ist, um:
eine Anforderung von dem Netzwerkknoten (10) zu empfangen, um den D2D-Betrieb durchzuführen;
zu bestimmen, ob das D2D-fähige UE (12-1) den D2D-Betrieb durchführt oder durchführen wird, basierend zumindest auf einer Entdeckung, durch das D2D-fähige UE (12-1), einer weiteren D2D-UE, mit dem das D2D-fähige UE (12-1) den D2D-Betrieb durchführen kann, und ob das D2D-fähige UE (12-1) den zellularen Betrieb durchführt oder durchführen wird; und
die Aktivitäts-/Inaktivitäts-Zustandskonfiguration für das D2D-fähige UE (12- 1) basierend auf der Bestimmung anzupassen;
wobei die Verarbeitungsschaltung (32) dazu konfiguriert ist, die Aktivitäts-/Inaktivitäts-Zustandskonfiguration anzupassen durch:
Konfigurieren des DRX für den D2D-Betrieb und für den zellularen Betrieb, und
Ausrichten der aktiven Zustandsperioden für den D2D-Betrieb und den zellularen Betrieb derart, dass sich die aktiven Zustandsperioden für den D2D-Betrieb und den zellularen Betrieb zumindest teilweise überlappen;
Bestimmen, ob das D2D-fähige UE (12-1) mit der angepassten Aktivitäts-/Inaktivitäts-Zustandskonfiguration das Durchführen des D2D-Betriebs und/oder des zellularen Betriebs beendet hat oder beenden wird; und
als Reaktion auf die Bestimmung, Dekonfigurieren oder Rekonfigurieren der angepassten Aktivitäts-/Inaktivitäts-Zustandskonfiguration für das D2D-fähige UE (12-1),
wobei die Dekonfiguration oder Rekonfiguration der angepassten Aktivitäts-/Inaktivitäts-Zustandskonfiguration die Dekonfiguration des DRX umfasst, was zu dem kontinuierlichen Empfang durch das D2D-fähige UE (12-1) führt.

15. Drahtloses Kommunikationsnetzwerk nach Anspruch 14, wobei die Verarbeitungsschaltung (32) ferner dazu konfiguriert ist, Verarbeitungsbetriebe auszuführen, die das Verfahren nach einem der Ansprüche 8 bis 11 implementieren.

## Revendications

1. Procédé dans un nœud de réseau (10) configuré pour fonctionner dans un réseau de communication sans fil, le procédé comprenant :
le fait de déterminer (610) si un équipement utilisateur (EU) (12-1) à capacité de dispositif à dispositif, (à capacité D2D), est en train d'exécuter ou exécutera une opération D2D sur la base d'au moins un rapport, reçu de l'EU à capacité D2D (12-1), indiquant qu'un ou plusieurs EU D2D supplémentaires ont été découverts par l'EU (12-1) à capacité D2D et si l'EU (12-1) à capacité D2D est en train d'exécuter ou exécutera une opération cellulaire ;
l'adaptation (620) d'une configuration de l'état d'activité/d'inactivité pour l'EU (12- 1) à capacité D2D, sur la base de ladite détermination (610),
dans lequel l'adaptation (620) de la configuration de l'état d'activité/d'inactivité comprend
la configuration de la réception discontinue, DRX, pour l'opération D2D et pour l'opération cellulaire, et
dans lequel l'adaptation (620) de la configuration de l'état d'activité/d'inactivité comprend en outre l'alignement des périodes d'état actif pour l'opération D2D et l'opération cellulaire de sorte que les périodes d'état actif pour l'opération D2D et l'opération cellulaire se chevauchent au moins partiellement ;
le fait de déterminer (640) si l'EU (12-1) à capacité D2D avec la configuration d'état d'activité/d'inactivité adaptée a arrêté ou arrêtera d'exécuter l'opération D2D et/ou l'opération cellulaire ; et
en réponse à ladite détermination (640), la déconfiguration ou la reconfiguration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne une réception continue par l'EU (12-1) à capacité D2D.

2. Procédé selon la revendication 1, dans lequel ladite adaptation (620) est effectuée sur la base de la détermination (610) que l'EU (12-1) à capacité D2D est en train d'exécuter ou exécutera l'opération D2D et est en train d'exécuter ou exécutera l'opération cellulaire.

3. Procédé selon la revendication 1 ou 2, dans lequel le fait de déterminer (610) si l'EU (12-1) à capacité D2D exécutera l'opération D2D comprend le fait de déterminer si l'EU (12-1) à capacité D2D exécutera l'opération D2D dans un premier intervalle de temps prédéterminé, dans lequel le fait de déterminer (610) si l'EU (12-1) à capacité D2D exécutera l'opération cellulaire comprend le fait de déterminer si l'EU (12-1) à capacité D2D exécutera l'opération cellulaire dans un second intervalle de temps prédéterminé, et dans lequel le premier intervalle de temps prédéterminé et le second intervalle de temps prédéterminé peuvent ou peuvent ne pas être identiques.

4. Procédé selon l'une quelconque des revendications 1 à 3, comprenant en outre la signalisation (630) d'une indication de la configuration de l'état d'activité/d'inactivité adaptée à l'EU (12-1) à capacité D2D, et/ou, comprenant en outre, la signalisation (630) d'une indication de la configuration de l'état d'activité/d'inactivité adaptée à un autre nœud de réseau.

5. Procédé selon l'une quelconque des revendications 1 à 4, dans lequel ledit fait de déterminer (610) si l'EU (12-1) à capacité D2D est en train d'exécuter ou exécutera l'opération D2D est fondé sur une ou plusieurs des informations suivantes :
une indication implicite ou explicite reçue d'un ou de plusieurs des EU (12-1) à capacité D2D, d'un second EU D2D et d'un autre nœud de réseau ;
une indication que l'EU (12-1) à capacité D2D fait partie d'un certain groupe d'intérêt pour lequel l'opération D2D est en cours ou va commencer ;
des mesures radio ;
une demande de ressources ou une demande de service pour l'opération D2D reçue de l'EU (12-1) à capacité D2D ; et
des informations de programmation pour l'opération D2D pour l'EU (12-1) à capacité D2D.

6. Procédé selon l'une quelconque des revendications 1 à 5, dans lequel ledit fait de déterminer (610) si l'EU (12-1) à capacité D2D est en train d'exécuter ou exécutera l'opération cellulaire est fondé sur une ou plusieurs des informations suivantes :
informations de programmation pour l'opération cellulaire de l'EU (12-1) à capacité D2D ; un modèle d'activité cellulaire entre l'EU (12-1) à capacité D2D et le nœud de réseau (10) ;
des données historiques ou des niveaux d'activité précédemment détectés sur une liaison entre l'EU (12-1) à capacité D2D et le réseau de communication sans fil ;
une opération cellulaire en cours inachevée ;
une configuration de mesure de l'EU (12-1) à capacité D2D ;
une demande de l'EU (12-1) à capacité D2D au réseau de communication sans fil ;
des informations provenant des fonctions de gestion des ressources radio du réseau de communication sans fil ; et une indication reçue d'un autre EU D2D qui est en train d'exécuter ou est configuré pour exécuter une communication D2D avec l'EU (12-1) à capacité D2D.

7. Procédé dans un réseau de communication sans fil, le réseau de communication sans fil comprenant un nœud de réseau (10) et un équipement utilisateur (EU) (12-1) à capacité de dispositif à dispositif, (à capacité D2D), le procédé comprenant :
le fait de déterminer (610), par le nœud de réseau (10), si l'EU (12-1) à capacité D2D est en train d'exécuter ou exécutera une opération D2D sur la base d'au moins un rapport, reçu de l'EU (12-1) à capacité D2D, indiquant qu'un ou plusieurs EU D2D supplémentaires ont été découverts par l'EU (12-1) à capacité D2D et si l'EU (12-1) à capacité D2D est en train d'exécuter ou exécutera une opération cellulaire ;
l'adaptation (620), par le nœud de réseau (10), d'une configuration de l'état d'activité/d'inactivité pour l'EU (12-1) à capacité D2D, basée sur ladite détermination (610), dans lequel l'adaptation (620) de la configuration de l'état d'activité/d'inactivité comprend :
la configuration de la réception discontinue, DRX, pour l'opération D2D et pour l'opération cellulaire, et
l'alignement des périodes d'état actif pour l'opération D2D et l'opération cellulaire de sorte que les périodes d'état actif pour l'opération D2D et l'opération cellulaire se chevauchent au moins partiellement ;
le fait de déterminer (640), par le nœud de réseau (10), si l'EU (12-1) à capacité D2D avec la configuration de l'état d'activité/d'inactivité adaptée a arrêté ou arrêtera d'exécuter l'opération D2D et/ou l'opération cellulaire ;
en réponse à ladite détermination (640), la déconfiguration ou la reconfiguration, par le nœud de réseau (10), de la configuration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne une réception continue par l'EU (12-1) à capacité D2D ;
la réception d'une demande, par l'EU (12-1) à capacité D2D du nœud de réseau (10), pour exécuter l'opération D2D ;
le fait de déterminer (710), par l'EU (12-1) à capacité D2D, si l'EU (12-1) à capacité D2D est en train d'exécuter ou exécutera l'opération D2D sur la base au moins d'une découverte, par l'EU (12-1) à capacité D2D, d'un autre EU D2D avec lequel l'EU (12-1) à capacité D2D peut exécuter l'opération D2D et si l'EU (12-1) à capacité D2D est en train d'exécuter ou exécutera l'opération cellulaire ;
l'adaptation (720), par l'EU (12-1) à capacité D2D, de la configuration de l'état d'activité/d'inactivité pour l'EU (12-1) à capacité D2D, sur la base de ladite détermination (710),
dans lequel l'adaptation (720) de la configuration de l'état d'activité/d'inactivité comprend la configuration de la DRX pour l'opération D2D et pour l'opération cellulaire, et
dans lequel l'adaptation (720) de la configuration de l'état d'activité/d'inactivité comprend en outre l'alignement des périodes d'état actif pour l'opération D2D et l'opération cellulaire de sorte que les périodes d'état actif pour l'opération D2D et l'opération cellulaire se chevauchent au moins partiellement ;
le fait de déterminer (740), par l'EU (12-1) à capacité D2D, si l'EU (12-1) à capacité D2D avec la configuration de l'état d'activité/d'inactivité adaptée a arrêté ou arrêtera d'exécuter l'opération D2D et/ou l'opération cellulaire ; et
en réponse à ladite détermination (740), la déconfiguration ou la reconfiguration de la configuration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne la réception continue par l'EU (12-1) à capacité D2D.

8. Procédé selon la revendication 7, dans lequel ladite adaptation (720) est effectuée sur la base de la détermination (710) que l'EU (12-1) à capacité D2D est en train d'exécuter ou exécutera l'opération D2D et est en train d'exécuter ou exécutera l'opération cellulaire ; et/ou,
dans lequel le fait de déterminer (710) si l'EU (12-1) à capacité D2D exécutera l'opération D2D comprend le fait de déterminer si l'EU (12-1) à capacité D2D exécutera l'opération D2D dans un premier intervalle de temps prédéterminé, dans lequel le fait de déterminer (710) si l'EU (12-1) à capacité D2D exécutera l'opération cellulaire comprend le fait de déterminer si l'EU (12-1) à capacité D2D exécutera l'opération cellulaire dans un second intervalle de temps prédéterminé, et dans lequel les premier et second intervalles de temps prédéterminés peuvent ou peuvent ne pas être identiques.

9. Procédé selon l'une quelconque des revendications 7 ou 8, comprenant en outre la signalisation (730) d'une indication de la configuration de l'état d'activité/d'inactivité adaptée à l'autre EU D2D ; et/ou, comprenant en outre la signalisation d'une indication de la configuration de l'état d'activité/d'inactivité adaptée au nœud de réseau (10) dans le réseau de communication sans fil.

10. Procédé selon l'une quelconque des revendications 7 à 9, dans lequel ledit fait de déterminer (710) si l'EU (12-1) à capacité D2D est en train d'exécuter ou exécutera l'opération D2D est fondé sur une ou plusieurs des opérations suivantes :
la programmation de l'opération D2D dans l'EU (12-1) à capacité D2D ;
la réception d'une demande de l'autre EU D2D pour l'établissement de l'opération D2D ;
la réception d'une demande d'exécution de l'opération D2D à partir du nœud réseau (10) ;
la détermination que l'EU (12-1) à capacité D2D est hors de portée du nœud de réseau (10) ;
la détermination qu'une qualité de signal mesurée sur des signaux transmis par le nœud de réseau (10) tombe en dessous d'un seuil ; et
la détermination que l'EU (12-1) à capacité D2D a perdu
la synchronisation avec un second EU D2D ; et/ou,
dans lequel ledit fait de déterminer (710) si l'EU (12-1) à capacité D2D est en train d'exécuter ou exécutera l'opération cellulaire est basé sur une ou plusieurs des opérations suivantes :
des informations de programmation pour l'opération cellulaire dans l'EU (12-1) à capacité D2D ;
une opération cellulaire en cours inachevée ;
une configuration de mesure de l'EU (12-1) à capacité D2D ;
la réception d'une demande d'exécution de l'opération cellulaire de la part de l'autre EU D2D ;
un modèle de l'opération cellulaire ;
une détermination de la disponibilité de nouveaux résultats de mesure de signal dans l'EU (12-1) à capacité D2D ;
une détermination qu'une qualité d'un signal mesurée sur des signaux transmis par le nœud de réseau (10) tombe en dessous d'un seuil ;
une détermination que l'EU (12-1) à capacité D2D a perdu la synchronisation avec l'autre EU D2D ;
une détermination que l'EU (12-1) à capacité D2D est incapable d'exécuter et/ou de maintenir l'opération D2D avec l'autre EU D2D.

11. Procédé selon l'une quelconque des revendications 1 à 10, dans lequel l'adaptation de la configuration de l'état d'activité/d'inactivité comprend également l'adaptation d'un ou de plusieurs des paramètres suivants :
une configuration DRX ;
une période DRX ;
un temps actif ;
une durée d'activation ;
un temps d'inactivité ;
une configuration de transmission discontinue, DTX ;
un temps de cycle DTX ;
une durée d'ACTIVATION DTX ; et
une durée d'INACTIVATION DTX ;
et/ou dans lequel l'adaptation de la configuration de l'état d'activité/d'inactivité comprend en outre une ou plusieurs des opérations suivantes :
la configuration des périodes d'ACTIVATION DRX orthogonales pour les opérations cellulaires et D2D ;
la configuration de la période d'ACTIVATION DRX commune pour les opérations cellulaires et D2D, dans lequel les opérations cellulaires et D2D peuvent ou peuvent ne pas se chevaucher dans le temps ;
la configuration de la configuration de l'état d'activité/d'inactivité pour réduire au minimum un temps actif total de l'EU (12-1) à capacité D2D ; et
la configuration d'un premier cycle DRX et d'un second cycle DRX pour les opérations sur une liaison D2D et une liaison EU-réseau, respectivement, dans lequel le premier cycle DRX et le second cycle DRX sont liés par une relation ; et/ou ;
dans lequel ladite adaptation tient compte d'une capacité ou d'une préférence de l'EU (12-1) à capacité D2D, la capacité ou la préférence comprenant une ou plusieurs des conditions suivantes :
que les périodes d'ACTIVATION DRX orthogonales sont préférables pour les EU qui ne peuvent pas prendre en charge simultanément des opérations D2D et cellulaires en général ou pour certains types d'opérations ;
que les périodes d'ACTIVATION DRX orthogonales sont préférables pour les EU avec une branche d'émission ;
que les périodes d'ACTIVATION DRX orthogonales sont préférables pour les EU qui peuvent provoquer des interruptions lors de la commutation entre les opérations D2D et cellulaires ;
que les périodes d'ACTIVATION DRX alignées peuvent être préférables pour les EU qui peuvent prendre en charge simultanément des opérations D2D et des opérations cellulaires, soit en général, soit pour le type d'opération en cours ;
la capacité de l'EU (12-1) à capacité D2D pour une opération D2D et une opération cellulaire simultanées ;
la capacité d'agrégation de porteuse, CA, de l'EU (12-1) à capacité D2D ;
un certain nombre d'antennes d'émission/réception dans l'EU (12-1) à capacité D2D qui peuvent être utilisées pour l'opération D2D et/ou l'opération cellulaire ;
une capacité liée à la puissance d'émission de l'EU (12-1) à capacité D2D ;
une capacité liée à la puissance de réception de l'EU (12-1) à capacité D2D ;
si l'EU (12-1) à capacité D2D peut également fonctionner sur un ou plusieurs systèmes non cellulaires en parallèle avec l'opération D2D ; et
si l'EU (12-1) à capacité D2D doit interrompre la réception et/ou la transmission de signaux lors de la transition ou de la commutation entre des opérations sur une liaison D2D et sur une liaison EU-réseau.

12. Nœud de réseau (10) configuré pour fonctionner dans un réseau de communication sans fil, ledit nœud de réseau (10) comprenant :
une interface de communication (20) configurée pour communiquer avec des dispositifs sans fil fonctionnant dans le réseau de communication sans fil et/ou pour communiquer avec un ou plusieurs autres nœuds de réseau ; et
un circuit de traitement (22) associé de manière opérationnelle à l'interface de communication (20) et configuré pour :
déterminer si un équipement utilisateur, (EU), (12-1) à capacité de dispositif à dispositif, (à capacité D2D), est en train d'exécuter ou exécutera une opération D2D sur la base au moins d'un rapport, reçu de l'EU (12-1) à capacité D2D, indiquant qu'un ou plusieurs EU D2D supplémentaires ont été découverts par l'EU (12-1) à capacité D2D et si l'EU (12-1) à capacité D2D est en train d'exécuter ou exécutera une opération cellulaire ;
adapter une configuration d'état d'activité/d'inactivité pour l'EU (12-1) à capacité D2D, sur la base de ladite détermination,
dans lequel le circuit de traitement (22) est configuré pour adapter la configuration de l'état d'activité/d'inactivité en :
configurant une réception discontinue, DRX, pour l'opération D2D et pour l'opération cellulaire, et
alignant des périodes d'état actif pour l'opération D2D et l'opération cellulaire de sorte que les périodes d'état actif pour l'opération D2D et l'opération cellulaire se chevauchent au moins partiellement ;
déterminer si l'EU (12-1) à capacité D2D avec la configuration de l'état d'activité/d'inactivité adaptée a arrêté ou arrêtera d'exécuter l'opération D2D et/ou l'opération cellulaire ; et
en réponse à ladite détermination, déconfigurer ou reconfigurer la configuration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne une réception continue par l'EU (12-1) à capacité D2D.

13. Nœud de réseau (10) selon la revendication 12, dans lequel le nœud de réseau (10) est configuré pour exécuter des opérations de traitement mettant en œuvre l'un quelconque des procédés des revendications 2 à 6.

14. Réseau de communication sans fil comprenant un nœud de réseau (10) et un équipement utilisateur (EU) (12-1) à capacité de dispositif à dispositif, (à capacité D2D), dans lequel :
le nœud réseau (10) comprend :
une interface de communication (20) configurée pour communiquer avec des dispositifs sans fil fonctionnant dans le réseau de communication sans fil et/ou pour communiquer avec un ou plusieurs autres nœuds de réseau ; et
un circuit de traitement (22) associé de manière opérationnelle à l'interface de communication (20) et configuré pour :
déterminer si l'EU (12-1) à capacité D2D est en train d'exécuter ou exécutera une opération D2D basée au moins sur un rapport, reçu de l'EU (12-1) à capacité D2D, indiquant qu'un ou plusieurs EU D2D supplémentaires ont été découverts par l'EU (12-1) à capacité D2D et si l'EU (12-1) à capacité D2D est en train d'exécuter ou exécutera une opération cellulaire ;
adapter une configuration de l'état d'activité/d'inactivité pour l'EU (12-1) à capacité D2D, sur la base de ladite détermination, dans lequel le circuit de traitement (22) est configuré pour adapter la configuration de l'état d'activité/d'inactivité en :
configurant une réception discontinue, DRX, pour l'opération D2D et pour l'opération cellulaire, et
alignant des périodes d'état actif pour l'opération D2D et l'opération cellulaire de sorte que les périodes d'état actif pour l'opération D2D et l'opération cellulaire se chevauchent au moins partiellement ;
déterminer si l'EU (12-1) à capacité D2D avec la configuration de l'état d'activité/d'inactivité adaptée a arrêté ou arrêtera d'exécuter l'opération D2D et/ou l'opération cellulaire ; et
en réponse à ladite détermination, déconfigurer ou reconfigurer la configuration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne une réception continue par l'EU (12-1) à capacité D2D ; et
l'EU (12-1) à capacité D2D comprend :
une interface de communication (30) configurée pour communiquer avec le réseau de communication sans fil, conformément aux protocoles de communication réseau définis, et configurée pour communiquer avec un ou plusieurs autres dispositifs sans fil via des communications D2D, conformément à des protocoles de communication D2D définis ; et
un circuit de traitement (32) qui est associé de manière opérationnelle à l'interface de communication (30) et configuré pour :
recevoir une demande du nœud réseau (10), pour exécuter l'opération D2D ;
déterminer si l'EU (12-1) à capacité D2D est en train d'exécuter ou exécutera l'opération D2D sur la base au moins d'une découverte, par l'EU (12-1) à capacité D2D, d'un autre EU D2D avec lequel l'EU (12-1) à capacité D2D peut exécuter l'opération D2D et si l'EU (12-1) à capacité D2D est en train d'exécuter ou exécutera l'opération cellulaire ; et
adapter la configuration de l'état d'activité/d'inactivité pour l'EU (12-1) à capacité D2D sur la base de ladite détermination ;
dans lequel le circuit de traitement (32) est configuré pour adapter la configuration de l'état d'activité/d'inactivité en :
configurant la DRX pour l'opération D2D et pour l'opération cellulaire, et
alignant les périodes d'état actif pour l'opération D2D et l'opération cellulaire de sorte que les périodes d'état actif pour l'opération D2D et l'opération cellulaire se chevauchent au moins partiellement ;
déterminer si l'EU (12-1) à capacité D2D avec la configuration d'état d'activité/d'inactivité adaptée a arrêté ou arrêtera d'exécuter l'opération D2D et/ou l'opération cellulaire ; et
en réponse à ladite détermination, déconfigurer ou reconfigurer la configuration de l'état d'activité/d'inactivité adaptée pour l'EU (12-1) à capacité D2D,
dans lequel la déconfiguration ou la reconfiguration de la configuration de l'état d'activité/d'inactivité adaptée comprend la déconfiguration de la DRX, ce qui entraîne une réception continue par l'EU (12-1) à capacité D2D.

15. Réseau de communication sans fil selon la revendication 14, dans lequel le circuit de traitement (32) est en outre configuré pour exécuter des opérations de traitement mettant en œuvre le procédé selon l'une quelconque des revendications 8 à 11.
